# DEMANDE DE BREVET EUROPEEN

(11) **EP 4 124 644 A1**
(43) Date de publication de la demande: **01.02.2023**
(21) Numéro de dépôt: 21306043.7
(22) Date de dépôt: 27.07.2021
(51) Int. Cl.: C10B 53/02, C12M 1/00, C12M 1/107

(54) **DISPOSITIF DE TRAITEMENT D'INTRANTS ET PROCÉDÉ MIS EN OEUVRE DANS UN TEL DISPOSITIF**

(71) Demandeur: Syctom L'Agence Metropolitaine Des Dechets Menagers, 75013 Paris (FR); Syndicat Interdepartemental pour l'Assainissement de l'Agglomeration Parisienne, 75012 Paris (FR)
(72) Inventeur: MOREAU, Thomas, 78190 Trappes (FR); MAGIS, Alain, B - 4682 HOUTAIN SAINT SIMEON (BE); BERNAT, Olivier, 28600 LUISANT (FR); MABROUK, Nabil, 78190 TRAPPES (FR); ANDRE, Laura, 60360 LIHUS (FR); RIBEIRO, Thierry, 80250 AILLY SUR NOYE (FR); PAUSS, André, 60200 COMPIEGNE (FR); BILLETTE, Patrick, 92500 RUEIL MALMAISON (FR); ROUTHIER, Florian, 92000 NANTERRE (FR); BRUNET, Antoine, 92000 NANTERRE (FR)
(74) Mandataire: Plasseraud IP

(57) **Abrégé**

La présente invention appartient au domaine du traitement d'intrants, plus particulièrement de la valorisation d'intrants organiques, en particulier et de préférence comprenant par exemple un mélange d'une fraction organique des déchets ménagers, des boues, et éventuellement des fumiers et de graisses, notamment par méthanisation, extraction de nutriments et pyrolyse notamment de la fraction solide issus de la déshydratation d'un digestat d'un mélange d'une fraction organique des déchets ménagers, des boues, et éventuellement des fumiers et de graisses.

## Description

La présente invention appartient au domaine du traitement d'intrants, plus particulièrement de la valorisation d'intrants organiques, en particulier et de préférence comprenant par exemple un mélange d'une fraction organique des déchets ménagers, des boues, et éventuellement des fumiers et de graisses, notamment par méthanisation, extraction de nutriments et pyrolyse notamment de la fraction solide issus de la déshydratation d'un digestat d'un mélange d'une fraction organique des déchets ménagers, des boues, et éventuellement des fumiers et de graisses.

L'objet de la présente invention se rapporte à un dispositif de traitement d'intrants organiques, en particulier et de préférence comprenant par exemple un mélange d'une fraction organique des déchets ménagers, des boues, et éventuellement des fumiers et de graisses, comprenant un dispositif de méthanisation bi-étagé, un dispositif d'extraction de nutriments phosphore et azote contenus dans un effluent liquide, ledit effluent étant de préférence la fraction liquide issue de la déshydratation d'un digestat d'un mélange d'une fraction organique des déchets ménagers, des boues et éventuellement de fumiers et de graisses, un séparateur, un moyen de séchage, un pyrolyseur comprenant un compartiment de postcombustion relié au dispositif de digestion de méthanisation bi-étagé, au dispositif d'extraction et/ou au moyen de séchage via un système de transfert de calories et à un procédé de traitement d'intrants comprenant une étape de digestion d'intrants dans un dispositif de méthanisation bi-étagée, une étape d'extraction de phosphore et d'azote sous forme de struvite et de de sel d'ammonium d'une fraction liquide du digestat de méthanisation, une étape de séchage d'une fraction solide du digestat de méthanisation, une étape de pyrolyse de la fraction solide du digestat de méthanisation séchée, une étape de combustion et une étape de régulation de la température du dispositif de méthanisation bi-étagé.

Des procédés et dispositifs de traitement d'intrants existent. Notamment, l'hydrolyse enzymatique permet une dégradation accélérée de la matière, mais elle nécessite l'injection d'enzymes dont la conservation est complexe : le coût de fonctionnement est donc important ce qui nuit à la rentabilité du procédé. L'utilisation de champs électriques pulsés est également à l'étude pour assurer une déstructuration poussée de la matière en vue de favoriser sa transformation au sein du procédé de méthanisation. Elle entraîne toutefois une forte consommation électrique et des résultats peu probants au regard de l'augmentation de rendement du procédé. L'utilisation d'une hydrolyse thermique en tête de procédé est également une solution développée par différentes entités et donnant de bons résultats. Elle est toutefois placée en tête de traitement et non sur une boucle de recirculation : la consommation énergétique est donc plus importante et le rendement global, bien qu'amélioré, reste inférieur à celui de la solution développée.

Il existe ainsi un besoin d'augmenter significativement les rendements des procédés de méthanisation mais aussi de permettre la mise en œuvre desdits procédés sur des mélanges d'intrants comprenant un mélange d'une fraction organique des déchets ménagers et des boues, ce qui n'est actuellement pas possible avec les procédés connus.

Les procédés de méthanisation, quels qu'ils soient produisent un résidu le digestat, qui comprend une partie solide et une partie liquide.

Des procédés et dispositifs d'extraction de nutriments existent également. Il existe notamment des dispositifs de récupération de struvite seule dans du digestat brut par ajout d'un réactif magnésien. Il existe aussi des dispositifs de stripping de l'azote utiles en cas de présence de jus très concentrés et d'un gisement de chaleur inexploité.

De plus, ils nécessitent généralement une forte consommation de soude lors du traitement des jus de digestat, qui sont le plus souvent légèrement acides. Cette forte consommation de soude dans les procédés connus les rend peu économique et entraîne des nuisances, notamment en ce qui concerne le transport des réactifs. Enfin, les calories produites par la combustion des syngaz ne sont jamais réutilisées, notamment pour réguler la température de dispositif de méthanisation, notamment pour favoriser les conditions thermophiles et mésophiles requises.

Il existe ainsi un besoin d'augmenter significativement les rendements des procédés de méthanisation tout en valorisant à la fois la fraction solide et la fraction liquide du digestat obtenu et ainsi d'en extraire les nutriments et les calories utiles.

Il existe ainsi un besoin d'augmenter significativement le rendement global des procédés de traitements d'intrants, notamment celles des étapes de méthanisation, de permettre la mise en œuvre desdits procédés sur des mélanges d'intrants comprenant un mélange d'une fraction organique des déchets ménagers, boues, de graisses et éventuellement de fumiers, ce qui n'est actuellement pas possible avec les procédés connus, tout en augmentant significativement les rendements des procédés d'extraction, de limiter les pertes de chaleurs en valorisant les quantités produites et ainsi rendre le procédé global de traitement d'intrants plus efficace et plus rentable.

Il est du mérite de la demanderesse d'avoir développé un nouveau dispositif et un nouveau procédé associé qui pallient les défauts et contraintes relevés dans les dispositifs et procédés connus.

Le dispositif et le procédée selon l'invention ont pour avantage de permettre l'auto-thermicité globale du dispositif sans valorisation thermique du biogaz (le méthane produit par méthanisation). Grâce à cette auto-thermicité, toute la production de méthane devient injectable sur le réseau gaz naturel. De plus, la mise en œuvre d'une pyrolyse, via notamment l'utilisation d'un four à soles multiples (ou MHF, pour l'abréviation anglaise) qui permet la transformation de la matière en sous-produits (gaz) et énergie (chaleur) qui peuvent être valorisable et évite tout retour au sol de la fraction organique des déchets (pollution diminuée). Par ailleurs, les fours à soles multiples, permettent une grande précision de température de combustion (comparé à un incinérateur par exemple) et permettent ainsi un contrôle de la combustion. Cela procure l'avantage supplémentaire de limiter la production de sous-produits nocifs (par exemples les gaz NOx). Le contrôle de la température permet en outre d'éviter toute liquéfaction éventuelle des métaux lourds, et donc leur possible épandage ou gazéification involontaire. Le dispositif et le procédé selon l'invention permettent ainsi de convertir la matière organique des intrants en matière minérale en exploitant au maximum cette ressource pour produire de l'énergie et des nutriments, tout en limitant la génération de polluants.

L'invention se rapporte à un dispositif de traitement d'intrants organiques, de préférence comprenant un mélange d'une fraction organique des déchets ménagers, des boues, et éventuellement des fumiers et de graisses, comprenant :
- un dispositif de méthanisation bi-étagé ;
- un dispositif d'extraction de nutriments choisis parmi au moins un élément sélectionné entre le phosphore, l'azote, voire le potassium, contenus dans un effluent liquide, ledit effluent étant de préférence la fraction liquide issue de la déshydratation du digestat issu d'un mélange d'une fraction organique des déchets ménagers, des boues et/ou fumiers ;
- un séparateur ;
- un moyen de séchage ;
- un pyrolyseur comprenant un compartiment de postcombustion, de préférence, relié au dispositif de digestion de méthanisation bi-étagé, au dispositif d'extraction et/ou au moyen de séchage via un système de transfert de calories.

Le terme « bi-étagé » au sens de l'invention qualifie un dispositif comportant deux réacteurs, voire un réacteur comportant deux compartiments, lesquels étant prévus pour réaliser des réactions et/ou des transformations de matière dans des conditions différentes. Le dispositif de méthanisation bi-étagé, dans le cadre de la présente invention, est un dispositif comportant deux réacteurs positionnés en série et avantageusement, le dispositif de méthanisation bi-étagé peut comprendre :
- un premier réacteur infiniment mélangé ;
- un second réacteur infiniment mélangé, ledit second réacteur étant muni d'une boucle de recirculation comprenant une unité de traitement par hydrolyse thermique comprenant un compartiment de traitement par détente flash, ladite boucle étant reliée d'une part à la sortie du second réacteur et d'autre part à l'entrée du second réacteur ;
lesdits premier et second réacteurs étant agencés en série.

Au sens de l'invention, le terme « infiniment mélangé» désigne un réacteur intégrant un moyen d'agitation permettant un mélange tel que le milieu est homogène en tout point de l'enceinte du réacteur, garantissant un mélange homogène au niveau moléculaire.

On entend par « intrants », un mélange d'une fraction organique de déchets ménagers, de boues, de fumiers et/ou des graisses. De préférence, il s'agit d'une fraction organique de déchets ménagers et de boues. Les déchets ménagers sont généralement issus de centres de traitement équipés d'une unité de criblage permettant l'extraction de la fraction dont le diamètre est compris dans l'intervalle allant de 0 à 10 mm riche en matière organique. Les boues sont généralement issues de stations de traitement des eaux usées et peuvent comprendre des boues primaires issues de la décantation des eaux ou des boues biologiques issues du traitement aérobie. Les intrants peuvent également comprendre des fumiers, généralement issus de centres équins. Les intrants ont généralement une siccité de 6 à 7 %.

On entend par « relié », une connexion directe ou indirecte entre deux éléments du dispositif.

On entend par «unité de traitement par hydrolyse thermique comprenant un compartiment de traitement par détente flash » une unité composée d'un réacteur de mise en pression avec injection de vapeur et d'un réacteur de détente flash munie d'une vanne pour mise à l'atmosphère. L'hydrolyse thermique se déroule dans le réacteur de mise en pression, sous l'effet de la pression et de la température. Ainsi, dans ladite unité de traitement, la mise en pression et la détente flash peuvent être réalisée dans deux réacteurs séparés. Alternativement, la mise en pression et la détente flash peuvent être réalisée dans un seul et même réacteur remplissant les deux fonctions.

Avantageusement, le premier réacteur est apte à fonctionner en conditions thermophiles. De préférence, le premier réacteur est configuré pour fonctionner en conditions thermophiles. On entend par « conditions thermophiles », des conditions permettant à des organismes thermophiles de prospérer. Les organismes thermophiles peuvent vivre et se multiplier entre 50 et 60 °C.

Avantageusement, le premier réacteur est un réacteur infiniment mélangé fonctionnant en continu ou CSTR en anglais pour Continuous Stirred-Tank Reactor. Les dimensions du premier réacteur sont généralement configurées pour avoir un rapport hauteur/diamètre de 1,5. De préférence, le premier réacteur est de forme cylindrique s'étendant autour d'un axe d'extension sensiblement vertical. Le réacteur peut présenter une section transversale par rapport à l'axe d'extension. La section transversale peut être de forme diverse ; par exemple de forme circulaire, rectangulaire ou carrée. Le premier réacteur comprend au moins une entrée et au moins une sortie. Le premier réacteur comprend une partie supérieure et une partie inférieure. De préférence, le premier réacteur est configuré pour fonctionner en conditions thermophiles. Le premier réacteur peut être muni d'un système de régulation de température (de préférence de chauffage) permettant d'assurer une homéostasie à 55 °C environ et isolé thermiquement. Il peut s'agir par exemple d'un système de régulation de température par recirculation et d'une isolation thermique poussée. Le système de régulation de température peut être un échangeur tubulaire ou spiralé. Le premier réacteur peut comprendre en outre une deuxième sortie (pour la récupération du gaz produit lors de l'étape d'hydrolyse). La deuxième sortie peut être munie d'un débitmètre. La deuxième sortie peut être reliée à un gazomètre. Il est ainsi possible de recueillir le gaz produit lors de l'étape d'hydrolyse dans le premier réacteur lors de la mise-en-œuvre du procédé selon l'invention. Le gazomètre peut être de forme sphérique et fixé sur le sol ou présenter la forme d'une demi-sphère, par exemple lorsqu'il est fixé sur la partie supérieure du premier réacteur.

Avantageusement, le second réacteur est apte à fonctionner en conditions mésophiles. De préférence, le second réacteur est configuré pour fonctionner en conditions mésophiles. On entend par « conditions mésophiles », des conditions permettant à des organismes mésophiles de prospérer (température de 37 °C à pH neutre). Un organisme mésophile est une forme de vie qui prospère au mieux dans des conditions de température modérée. Classiquement, on parle de bactéries mésophiles lorsqu'elles vivent à des températures comprises entre 20 et 40 °C.

Avantageusement, le second réacteur est un réacteur infiniment mélangé fonctionnant en continu ou CSTR en anglais pour Continuous Stirred-Tank Reactor. Les dimensions du second réacteur sont généralement configurées pour avoir un rapport hauteur/diamètre de 1,5. De préférence, le second réacteur est de forme cylindrique s'étendant autour d'un axe d'extension sensiblement vertical. Le réacteur peut présenter une section transversale par rapport à l'axe d'extension. La section transversale peut être de forme diverse ; par exemple de forme circulaire, rectangulaire ou carrée. Le second réacteur comprend au moins une entrée et au moins une sortie. Le second réacteur comprend une partie supérieure et une partie inférieure. De préférence, le second réacteur est configuré pour fonctionner en conditions mésophiles. Le second réacteur peut être muni d'un système de régulation de température. Il peut s'agir par exemple d'un système de régulation de température par recirculation et d'une isolation thermique poussée. Le système de régulation de température par recirculation peut être un échangeur tubulaire ou spiralé. Le second réacteur peut comprendre en outre une deuxième sortie (pour la récupération du gaz produit lors de l'étape de méthanogénèse). La deuxième sortie peut être munie d'un débitmètre. La deuxième sortie peut être reliée à un gazomètre. Il est ainsi possible de recueillir le méthane produit dans le second réacteur lors de la mise-en-œuvre du procédé selon l'invention. Le gazomètre peut être de forme sphérique et fixé sur le sol ou présenter la forme d'une demi-sphère, par exemple lorsqu'il est fixé sur la partie supérieure du second réacteur.

Avantageusement, le second réacteur est muni d'une boucle de recirculation, ladite boucle étant reliée d'une part à la sortie du second réacteur et d'autre part à l'entrée du second réacteur. Le sens de circulation prévu dans la boucle de recirculation allant de la sortie du second réacteur vers l'entrée du second réacteur. La boucle de recirculation comprend une unité de traitement par hydrolyse thermique comprenant un compartiment de traitement par détente flash.

Avantageusement, l'unité de traitement par hydrolyse thermique comprenant un compartiment de traitement par détente flash comprend un réacteur de détente flash composée d'un réacteur de mise en pression avec injection de vapeur puis d'un réacteur de détente munie d'une vanne pour mise à l'atmosphère. La boucle de recirculation peut comprendre en outre une presse à vis située en amont du réacteur de mise en pression avec injection de vapeur de l'unité de traitement par hydrolyse thermique, par rapport au sens de circulation dans la boucle et permettant de limiter la teneur en eau du mélange (siccité cible de 12 %) et donc la consommation énergétique nécessaire au chauffage du mélange.

Avantageusement, le(s) premier et/ou second réacteur(s) peut/peuvent comprendre un agitateur mécanique. L'agitateur mécanique est de préférence pendulaire.

Avantageusement, les premier et second réacteurs sont agencés en série, c'est-à-dire que l'entrée de second réacteur est reliée à la sortie du premier réacteur. Les sens de circulation des intrants étant prévus dans le sens premier puis second réacteur. La sortie du premier réacteur est reliée à l'entrée du second réacteur. L'entrée du second réacteur est reliée à la sortie du premier réacteur et à la sortie de l'unité de traitement par détente flash comprise dans la boucle de recirculation. La sortie du second réacteur est reliée à l'unité de traitement par détente flash et à l'évacuation du digestat en excès.

Les premier et second réacteurs (hors boucle de recirculation comprenant l'unité de traitement par détente flash) peuvent être identiques ou différents.

Avantageusement, le dispositif selon l'invention peut comprendre en outre un moyen d'homogénéisation. Le moyen d'homogénéisation comprend au moins deux entrées et une sortie. Le moyen d'homogénéisation peut ainsi être relié à la sortie du premier réacteur et à la boucle de recirculation. Le moyen d'homogénéisation peut être un mélangeur. Il peut s'agir d'une cuve munie d'un agitateur mécanique, de préférence un agitateur pendulaire. Le moyen d'homogénéisation peut être relié à l'entrée du second réacteur. Le moyen d'homogénéisation permet ainsi d'homogénéiser le mélange digestat A/digestat C avant son introduction dans le second réacteur, selon le procédé de l'invention décrit ci-dessous.

Avantageusement, le dispositif selon l'invention peut comprendre un moyen de stockage. Le moyen de stockage (également appelé cuve tampon) peut être positionné en amont du premier réacteur, entre le premier et le second réacteur et/ou entre le second réacteur et la sortie et/ou la boucle de recirculation. Le moyen de stockage peut être une cuve dite « tampon », permettant de réguler les transferts de masse d'un réacteur à un autre, sur la boucle ou en sortie du dispositif, afin d'éviter tout débordement ou colmatage. Lorsque le moyen de stockage est positionné entre le premier et le second réacteur, il peut être identique ou différent du moyen d'homogénéisation.

Avantageusement, le dispositif selon l'invention peut comprendre en outre un échangeur thermique, de préférence tubulaire. L'échangeur thermique peut être relié à l'unité de traitement par hydrolyse thermique comprenant un compartiment de traitement par détente flash et plus particulièrement directement au compartiment de détente flash. L'échangeur thermique peut en outre être relié au système de régulation de température du premier réacteur ou au système de régulation de température du second réacteur. L'échangeur thermique peut permettre de valoriser la chaleur fatale de l'équipement. On entend par « chaleur fatale » ou « chaleur de récupération », la chaleur générée par le compartiment de détente flash qui n'en constitue pas la finalité première, et qui n'est normalement pas récupérée. Il s'agit ici par exemple de transférer les calories récupérées sur l'unité de traitement par hydrolyse thermique comprenant un compartiment de traitement par détente flash et de les utiliser pour réguler la température du premier et/ou du second réacteur.

Avantageusement, le dispositif selon l'invention peut être muni d'un ensemble de pompes et de vannes permettant le transfert automatique ou manuel des digestats A, B et/ou C d'un élément du dispositif à un autre.

Avantageusement, le dispositif d'extraction de nutriments phosphore et azote contenus dans un effluent liquide peut comprendre :
- un premier réacteur comprenant un moyen d'extraction de CO₂, de préférence une colonne à garnissage ou un réacteur à barbotage (également appelé bulleur) ;
- un deuxième réacteur comprenant un réacteur à lit fluidisé, de préférence surmonté d'un décanteur ;
- un troisième réacteur comprenant un moyen d'extraction d'ammoniac, comprenant de préférence au moins une colonne à garnissage ou au moins un réacteur à barbotage (également appelé bulleur) et un laveur de gaz ;
les premier, deuxième et troisième réacteurs étant agencés en série.

On entend par « nutriments », des éléments tels que de l'azote (N), du phosphore (P) et du potassium (K), utiles en agriculture, notamment à la réalisation d'amendements du sol.

On entend par « effluent liquide », un jus de déshydratation de matière organique, ou un jus de déshydratation de digestats de matière organique telle que de la FOR (Fraction Organique Résiduelle), boues, fumiers, graisses, etc., le jus de déshydratation de digestats pouvant être par exemple obtenu à l'issue d'un procédé de méthanisation (par exemple, un procédé de méthanisation bi-étagé). Il s'agit des jus (fraction liquide) récupérés en sortie de presse à vis à l'issue d'un procédé de méthanisation. Selon l'invention, l'effluent liquide est de préférence issu de la déshydratation d'un digestat d'un mélange d'une fraction organique des déchets ménagers, des boues et éventuellement de fumiers et de graisses.

Comme précisé précédemment dans le cadre de la présente invention, on entend par « relié », une connexion directe ou indirecte entre deux éléments du dispositif.

Avantageusement, le premier réacteur comprend un moyen d'extraction de CO₂. Le moyen d'extraction de CO₂ est configuré pour extraire le CO₂ contenu dans l'effluent liquide. Le moyen d'extraction de CO₂ peut être une colonne à garnissage ou un réacteur à barbotage (ou bulleur). Il s'agit de préférence d'une colonne à garnissage. Il peut s'agir d'une colonne dite de « stripping » à garnissage.

Avantageusement, le premier réacteur peut comprendre une colonne à garnissage. De préférence, le premier réacteur est constitué d'une colonne à garnissage, d'une pompe, d'un filtre, l'instrumentation de suivi, la tuyauterie et d'un ensemble de vannes. Lorsque le premier réacteur comprend une pompe et un filtre, ces éléments sont positionnés en amont de l'entrée (de l'effluent liquide) de la colonne à garnissage.

On entend par « garnissage », un assemblage, en vrac ou structuré, qui permet d'augmenter la surface de contact entre une phase liquide et une phase gazeuse, améliorant ainsi les échanges entre les phases pour un volume de colonne donné. Le garnissage peut avoir une surface d'échange et un pourcentage de vide variables. Il peut ainsi être adapté aux performances et aux taux de MES (matières en suspension) en entrée de traitement. Le garnissage peut être un garnissage d'origine naturelle et/ou synthétique. Le garnissage est de préférence choisi dans le groupe comprenant les matériaux naturels minéraux, les matériaux synthétiques et un mélange de ceux-ci. Le garnissage peut par exemple être composé de polyéthylène haute densité (PEHD), de polypropylène haute densité (PPHD), de polyfluorure de vinylidène (PVDF), ou d'un mélange de ces matériaux.

On entend par « colonne à garnissage », un réacteur (généralement une colonne, ou cylindre de révolution) dans lequel on dispose du garnissage sur une hauteur définie et dans lequel on fait circuler à contre-courant deux fluides (l'effluent liquide et un gaz, i.e. de l'air). La colonne à garnissage peut aussi être appelée colonne de stripping à garnissage. La colonne à garnissage peut être sous forme d'un cylindre de révolution et peut avoir des dimensions variables, adaptées au volume d'effluent à traiter. La colonne peut être configurée de sorte que le ratio volumique des débits air et de liquide soit compris entre 50 et 500 (pour ce premier réacteur).

Avantageusement, le premier réacteur peut être muni d'une pompe, de préférence une pompe à rotor munie d'un variateur de fréquence. Le variateur de fréquence permet notamment d'adapter le dispositif au flux à traiter et donne de la souplesse au procédé mis en œuvre dans ledit dispositif par rapport à une installation à débit fixe. Cela permet notamment, l'amortissement pour le contrôle du niveau dans la partie inférieure du réacteur lorsque l'alimentation de ce même réacteur n'est pas elle-même stabilisée. Généralement, le débit nominal se situe au centre de la gamme de fonctionnement de la pompe. Le premier réacteur peut en outre être muni d'un filtre positionné en aval de la pompe à rotor et en amont de la colonne à garnissage. Le filtre peut être un filtre à décolmatage automatique. Le filtre a pour effet de limiter les quantités de matières en suspension (MES) envoyées dans la colonne à garnissage et pouvant, en cas de pic, lors des opérations de démarrage de la presse à vis, entraîner des dysfonctionnements sur la colonne à garnissage.

Avantageusement, le premier réacteur peut être muni en outre d'un décanteur. Le décanteur peut être en remplacement ou en complément du filtre, en amont. Le décanteur peut être utile en cas de trop forte concentration en MES (par exemple lorsque la concentration en MES est > 1g/L) et limiter le colmatage du filtre.

Avantageusement, le premier réacteur peut être muni en outre d'un décanteur. Le décanteur peut être en remplacement ou en complément du filtre, en amont. Le décanteur peut être utile en cas de trop forte concentration en MES (par exemple lorsque la concentration en MES est > 1g/L) et limiter le colmatage du filtre.

Avantageusement, le premier réacteur comprend au moins une entrée et au moins une sortie. Le premier réacteur peut comprendre une entrée et une sortie (pour la fraction liquide) et une entrée et une sortie (pour le gaz, i.e. l'air). Lorsque le premier réacteur comprend une colonne à garnissage, les entrées et sorties respectives sont configurées de sorte à permettre à l'effluent liquide et au gaz de circuler à contre-courant l'un par rapport à l'autre.

Avantageusement, le premier réacteur 10 peut comprendre une cuve tampon 100 (pour stocker l'effluent liquide) comprenant une entrée 105 et une sortie 106 (configurées pour la circulation de l'effluent liquide), une pompe 101 (pour acheminer l'effluent liquide dans la colonne à garnissage), un filtre 102, une colonne à garnissage 103 comprenant une entrée 107 et une sortie 108 (configurées pour la circulation de l'effluent liquide) et une entrée 109 et une sortie 110 (configurées pour la circulation du gaz), un ventilateur 104.

Avantageusement, le premier réacteur peut comprendre un réacteur à barbotage ou bulleur (en remplacement de la colonne à garnissage).

Avantageusement, le deuxième réacteur est un réacteur à lit fluidisé comprenant une partie inférieure et une partie supérieure. Le lit peut comprendre des particules de struvites en formation par cristallisation. Le réacteur à lit fluidisé peut avoir une hauteur allant de 1 à 5 m. La section du réacteur à lit fluidisé section peut être adaptée selon le débit de liquide à traiter. La partie supérieure du réacteur à lit fluidisé peut être surmontée d'un décanteur. La section du décanteur peut être d'un diamètre supérieur ou égal à celle du réacteur à lit fluidisé. Le décanteur peut être configuré de sorte à obtenir une vitesse ascensionnelle du liquide à traiter dans le lit fluidisé inférieure ou égale à 0,6 m/h (rapport débit d'alimentation / surface du réacteur).

Avantageusement, le deuxième réacteur peut en outre être muni d'un circuit de recirculation. Le circuit de recirculation peut être relié au décanteur et à la partie inférieure du réacteur à lit fluidisé. Le circuit de recirculation est configuré pour réinjecter dans la partie inférieure du réacteur les fines particules de struvite prélevées dans le décanteur et favoriser ainsi la croissance des cristaux dans le réacteur.

Avantageusement, le deuxième réacteur comprend au moins une entrée et au moins une sortie. L'entrée du deuxième réacteur est reliée à la sortie du premier réacteur.

Avantageusement, le deuxième réacteur 20 peut comprendre une pompe 200 (pour acheminer l'effluent A dans le réacteur à lit fluidisé), un réacteur à lit fluidisé 201, surmonté d'un décanteur 202, une entrée 203 et une sortie 204 (configurées pour la circulation de l'effluent A), une sortie 205 (configurées pour extraire la struvite du réacteur), un circuit de recirculation 206.

Avantageusement, le troisième réacteur est un ensemble d'éléments et peut comprendre un moyen d'extraction d'ammoniac et un laveur de gaz.

Avantageusement, le troisième réacteur comprend un moyen d'extraction d'ammoniac. Le moyen d'extraction d'ammoniac est configuré pour extraire l'ammoniac contenu dans l'effluent B. Le moyen d'extraction d'ammoniac peut être au moins une colonne à garnissage ou au moins un réacteur à barbotage ou un bulleur, de préférence le moyen d'extraction est au moins une colonne à garnissage.

Avantageusement, le troisième réacteur peut comprendre au moins une, de préférence au moins deux colonnes à garnissage et un laveur de gaz. Les éléments (colonne(s) et laveur) sont agencés en série, du point de vue du gaz circulant, l'effluent B ne circulant pas dans le laveur de gaz. Le garnissage peut être un garnissage d'origine naturelle et/ou synthétique. Le garnissage est de préférence choisi dans le groupe comprenant les matériaux naturels minéraux, les matériaux synthétiques et un mélange de ceux-ci. Le garnissage peut par exemple être composé de polyéthylène haute densité (PEHD), de polypropylène haute densité (PPHD), de polyfluorure de vinylidène (PVDF), ou d'un mélange de ces matériaux. Lorsqu'il y en a plusieurs, les colonnes à garnissage du troisième réacteur peuvent être identiques ou différentes. Chacune desdites colonnes peut se présenter sous forme d'un cylindre de révolution et peut avoir des dimensions variables. Dans le troisième réacteur, la ou les colonne(s) à garnissage est(sont) dimensionnée(s) de sorte à permettre un ratio volumique gaz / liquide compris dans un intervalle allant de 500 à 5000.

Avantageusement, le troisième réacteur peut être muni d'une pompe de transfert. De préférence, la pompe est une pompe centrifuge sur variation de fréquence. La pompe de transfert est configurée pour permettre la recirculation du fluide du bas de la colonne vers le haut de la colonne de sorte à le répartir sur le garnissage.

Avantageusement, le laveur de gaz est configuré pour assurer un taux d'élimination adéquate, conformément aux règles de l'art. Le laveur de gaz est configuré pour autoriser une vitesse du gaz, dans le laveur, inférieure ou égale à 3 m/s. Le laveur de gaz peut comprendre une colonne à garnissage ou un bulleur (ou barboteur).

Avantageusement, le troisième réacteur peut comprendre en outre une cuve infiniment mélangée. De préférence, la cuve est positionnée en amont du moyen d'extraction d'ammoniac, de préférence de la ou des colonnes à garnissage, par rapport au sens de circulation prévu pour l'effluent. La cuve infiniment mélangée peut être de polyéthylène haute densité (PEHD), de polypropylène haute densité (PPHD), de polyfluorure de vinylidène (PVDF), ou d'un mélange de ces matériaux. Cette cuve peut en outre servir de cuve tampon, afin de permettre la régulation du liquide dans la ou les colonnes à garnissage.

Avantageusement, le troisième réacteur peut comprendre en outre un moyen de régulation de la température. Il peut s'agir d'un échangeur à plaques. La régulation de la température peut par exemple être réalisée par la recirculation du liquide contenu dans la cuve tampon dans un échangeur à plaques. Cet échangeur peut être raccordé à un réseau d'eau chaude.

Avantageusement, le troisième réacteur comprend au moins une entrée et au moins une sortie. Le troisième réacteur peut comprendre une entrée et une sortie (pour la fraction liquide) et une entrée et une sortie (pour le gaz, i.e. l'air). L'entrée du troisième réacteur est reliée à la sortie du deuxième réacteur. De préférence, le troisième réacteur est un ensemble d'éléments et peut comprendre une cuve, au moins deux colonnes à garnissage et un laveur de gaz, agencés en série (du point de vue du gaz circulant, l'effluent B ne circulant pas dans le laveur de gaz).

Avantageusement, le troisième réacteur 30 peut comprendre une pompe 301 (pour acheminer l'effluent B dans la première colonne à garnissage), une première colonne à garnissage 302 comprenant une entrée 310 et une sortie 311 (configurées pour la circulation de l'effluent B), une entrée 312 et une sortie 313 (configurées pour la circulation du gaz), une pompe 303 (pour acheminer l'effluent B dans la deuxième colonne à garnissage), une deuxième colonne à garnissage 304 comprenant une entrée 314 et une sortie 315 (configurées pour la circulation de l'effluent B), une entrée 316 et une sortie 317 (configurées pour la circulation du gaz), une pompe 305 (pour extraire le liquide enrichi en sels d'ammonium du laveur), un laveur de gaz 306 comprenant une entrée 318 et une sortie 319 (configurées pour la circulation du gaz), une entrée 320 et une sortie 321 (configurées respectivement pour l'introduction du liquide destiné à être enrichi en sels d'ammonium et l'évacuation du liquide enrichi en sels d'ammonium), une cuve de stockage 322 (pour stocker le liquide enrichi en sels d'ammonium), une pompe 307, un réacteur infiniment mélangé 308 comprenant un agitateur mécanique 323, un système de régulation de température 325 et une entrée 326 et une sortie 327 (configurées pour la circulation de l'effluent B), un filtre 309 et un ventilateur 324.

Avantageusement, le séparateur peut être une presse à vis ou une centrifugeuse. Le séparateur est relié d'une part à la sortie du dispositif de digestion bi-étagée (de préférence à la sortie du second réacteur infiniment mélangé), et d'autre part au dispositif d'extraction de nutriments (pour y acheminer la fraction liquide du digestat B) et au sécheur (pour y acheminer la fraction solide du digestat B).

Avantageusement, le moyen de séchage est un sécheur à bande fonctionnant à basse température. On entend par basse température, une température allant de 60 à 160 °C, température généralement observée pour ce type d'appareillage. Le moyen de séchage comprend une entrée et une sortie. L'entrée du moyen de séchage est reliée au séparateur et la sortie du moyen de séchage est reliée à l'entrée du pyrolyseur.

Avantageusement, le pyrolyseur est un four à soles multiples ou Multiple Hearth Furnaces (MHF) en anglais ou un four discontinu à une sole. Les dimensions du four peuvent varier en fonction du débit d'intrants à traiter. Les parois intérieures du four sont recouvertes de matériaux réfractaires. Le diamètre de la ou les soles est généralement compris dans un intervalle allant de 2 à 8 mètres. Le four peut être configuré pour fonctionner à un coefficient d'excès d'air (λ) allant de 0.8 à 2. De préférence, il est configuré pour fonctionner à un ratio inférieur ou égal 1,5. Le four peut être configuré de sorte que la température soit toujours inférieure à 1100°C, de préférence comprise dans un intervalle de température allant de à 400 °C à 1000°C. Le pyrolyseur est muni d'un compartiment de postcombustion. Le compartiment peut être est externe. Le compartiment de postcombustion est configuré pour permettre la combustion de syngaz produit dans le pyrolyseur, à une température inférieure ou égale à 1200°C, de préférence allant de 600 à 1100°C. Le compartiment de postcombustion peut comprendre un ou plusieurs brûleur(s), en fonction des dimensions du compartiment. Le compartiment de postcombustion comprend une entrée permettant d'y acheminer de l'air, nécessaire à la combustion des syngaz. Le pyrolyseur comprend au moins une entrée et au moins une sortie. L'entrée du pyrolyseur est reliée à la sortie du moyen de séchage. La sortie du pyrolyseur peut être reliée à un moyen d'extraction et de refroidissement (pour les cendres). Le pyrolyseur et le compartiment de postcombustion comprennent chacun au moins une entrée et une sortie configurés pour permettre la circulation des gaz (air, syngaz).

Avantageusement, le moyen d'extraction peut être une vis de refroidissement ou un "rotary cooler". Le moyen d'extraction est relié à la sortie du pyrolyseur.

Avantageusement, le compartiment de postcombustion peut en outre être relié au dispositif de digestion de méthanisation bi-étagé, au dispositif d'extraction et/ou au moyen de séchage via un système de transfert de calories. Le système de transfert de calories peut être un échangeur thermique, de préférence à plaques, tubulaire ou spiralé. Cette connexion permet un transfert de calories vers lesdits dispositifs afin de réguler leur température.

Avantageusement, le système de transfert de calories peut comprendre une chaudière à tubes reliée à au moins échangeur de chaleur.

Avantageusement, le dispositif peut comprendre au moins un élément de stockage. Un élément de stockage peut être positionné entre deux réacteurs et/ou éléments (autres qu'un réacteur et tels que sécheur, pyrolyseur, etc...) adjacents ou bien sur la boucle de recirculation, de préférence en aval de l'unité de traitement par détente flash.

L'invention se rapporte également à un procédé de traitement d'intrants, de préférence un mélange d'une fraction organique des déchets ménagers, boues et/ou fumiers, comprenant les étapes :
A) introduction et digestion d'intrants dans un dispositif de méthanisation bi-étagée, de manière à obtenir un digestat D ;
B) séparation du digestat D, de manière à obtenir une fraction liquide de digestat D et une fraction solide de digestat D ;
C) introduction de la fraction liquide du digestat D dans un dispositif d'extraction et extraction de nutriments phosphore et azote contenus dans ladite fraction liquide ;
D) séchage de la fraction solide du digestat D ;
E) pyrolyse de la fraction solide du digestat D séchée obtenue à l'étape D), de manière à obtenir un syngaz et des cendres ;
F) combustion du syngaz obtenu à l'étape E).

A l'issue de l'étape F), les calories obtenues suite à la combustion des syngaz peuvent être stockée ou utilisées directement pour la régulation de la température du dispositif de méthanisation bi-étagée, d'extraction et/ou de séchage par transfert desdites calories.

Avantageusement, le procédé selon l'invention peut comprendre en outre une étape G) de régulation de la température du dispositif de méthanisation bi-étagée, d'extraction de nutriments et/ou de séchage par transfert des calories produites par l'étape F) de combustion.

Avantageusement, le procédé est un procédé continu ou semi-continu.

On entend par « syngaz » ou « gaz de synthèse », un mélange gazeux combustible produit par l'étape de pyrolyse. Il s'agit généralement d'un gaz sale, toxique, acide et corrosif s'il n'a pas été soigneusement épuré. Il est issu d'une réaction chimique complexe et peut comprendre par exemple CO, CO₂, H₂O, N₂, SOx, poussières, matières volatiles (composés organiques volatiles, COV, principalement), NOx.

Avantageusement, l'étape A) du procédé selon l'invention peut comprendre les sous-étapes :
a) introduction d'intrants dans un premier réacteur infiniment mélangé,
b) hydrolyse en conditions thermophiles des intrants dans le premier réacteur infiniment mélangé, de manière à obtenir un digestat A ;
c) introduction dans un second réacteur infiniment mélangé du digestat A obtenu à l'étape b) et du digestat C obtenu à l'étape e) ;
d) méthanogénèse en conditions mésophiles du digestat A et du digestat C introduits dans le second réacteur à l'étape c), de manière à obtenir un digestat B ;
e) séparation du digestat B obtenu à l'étape d) en une première fraction (F1) et une seconde fraction F2, ladite première fraction (F1), optionnellement épaissie, étant soumise à une détente flash de manière à obtenir un digestat C, ledit digestat C étant réintroduit dans le second réacteur à l'étape c) et un digestat D.

Lors de la mise en route du procédé selon l'invention, il est possible que seul du digestat A soit introduit dans le second réacteur à l'étape c) (car il n'existe pas encore de digestat C), afin de produire du digestat B dont une fraction sera transformée en digestat C. À l'issue de cette mise en route du procédé, l'étape c) est réalisée normalement, comme indiqué ci-dessus. Lors d'une mise en route du procédé selon l'invention, le digestat C peut aussi provenir d'une précédente mise en œuvre du procédé, dans ce cas de figure, même lors de la mise en route du procédé, un digestat A et un digestat C sont introduits lors de l'étape c).

Le procédé selon l'invention permet ainsi une hydrolyse plus complète de la matière. Le procédé selon l'invention permet de dégrader de la matière organique difficilement dégradable qui subsiste dans le digestat et la transformer en molécules facilement assimilables par la flore bactérienne. Il s'agit par exemple de longues chaînes carbonées (ayant généralement de 10 à 30 atomes de carbone) qui n'étaient généralement pas dégradées dans les procédés connus. Le produit obtenu à l'issue du procédé est tel, qu'il permet d'assurer une hydrolyse physique de la matière organique réfractaire : les longues chaînes carbonées alors sont découpées en morceaux par l'effet de la chaleur et de la pression lors de la détente flash et deviennent plus facilement mobilisables par la flore bactérienne.

Le procédé selon l'invention permet de convertir la matière organique hydrolysée thermiquement en méthane (à l'étape b)), et d'atteindre un taux global d'expression du BioMéthane Potentiel (BMP) des intrants de 110 %.

Avantageusement, lors de la mise en œuvre de l'étape a), les intrants peuvent être introduits dans le premier réacteur au moyen d'une pompe, de préférence une ou plusieurs pompes péristaltiques. Préalablement à la mise en œuvre de l'étape a), les intrants peuvent subir une étape de broyage. Le broyage peut être réalisé au moyen de couteaux ; permettant de réduire la taille des fibres longues (par exemple les fibres mesurant plus de 5 cm).

Avantageusement, le procédé peut être en œuvre par batch (ou lot), en continu ou en semi-continu. Ainsi les étapes a) à e) peuvent être mise en œuvre consécutivement ou simultanément.

Avantageusement, l'étape b) d'hydrolyse est réalisée en conditions thermophiles dans le premier réacteur. Le temps de séjour de l'étape b) peut être compris dans un intervalle allant de 2 à 10 jours, de préférence 5 jours (on entend par jour, une durée de 24 heures). La température de l'hydrolyse de l'étape b) peut être comprise dans un intervalle allant de 50 à 60 °C, de préférence 55 °C. L'étape b) peut comprendre une agitation pendant tout ou partie de la réaction d'hydrolyse. À l'issue de l'étape b), on obtient un digestat A. Le digestat A est généralement composé d'un mélange d'acides gras volatiles (AGV) en forte concentration. Il peut s'agir par exemple d'acide butyrique, mais aussi acide propionique ou acétique.

Avantageusement, lors de la mise en œuvre de l'étape c), le digestat A peut être introduit dans le second réacteur au moyen d'une pompe, de préférence une pompe péristaltique.

Avantageusement, lors de la mise en œuvre de l'étape c), le digestat C peut être introduit dans le second réacteur au moyen d'une pompe, de préférence une pompe péristaltique. Préalablement à la mise en œuvre de l'étape c), le digestat C peut subir une étape d'épaississement par presse à vis visant à augmenter la teneur en matière sèche du mélange. La phase d'épaississement permet l'atteinte d'une siccité cible de 12 %.

Avantageusement, lors de la mise en œuvre de l'étape c), le digestat C peut être introduit dans le second réacteur au moyen d'une pompe, de préférence une pompe péristaltique. Préalablement à la mise en œuvre de l'étape c), le digestat C peut subir une étape d'épaississement par presse à vis visant à augmenter la teneur en matière sèche du mélange. La phase d'épaississement permet l'atteinte d'une siccité cible de 12 %.

On définit un ratio volumique digestat C/digestat A. Dans l'étape c), le ratio Vdigestat C/Vdigestat A est compris dans un intervalle allant de 20 à 30 %.

Avantageusement, l'étape c) peut comprendre une sous étape de mélange et d'homogénéisation des digestats A et C avant leur introduction (sous forme de mélange) dans le second réacteur.

Avantageusement, l'étape d) de méthanogénèse est réalisée en conditions mésophiles dans le second réacteur. Le temps de séjour de l'étape d) peut être compris dans un intervalle allant de 10 à 20 jours, de préférence 15 jours. La température de la méthanogénèse de l'étape d) peut être comprise dans un intervalle allant de 34 à 40 °C, de préférence 37 °C. L'étape d) peut comprendre une agitation pendant tout ou partie de la méthanogénèse. À l'issue de l'étape d), on obtient un digestat B. Le digestat B est généralement composé de matières minérales issues de la dégradation de la matière organique.

Avantageusement, l'étape d) de méthanogénèse peut comprendre en outre une sous-étape de contrôle du pH et de régulation du pH. Généralement, dans ce type de réaction, un pH < 6 indique un empoisonnement du milieu réactionnel (acidose) et une perte de productivité. L'étape d) peut ainsi comprendre une sous-étape de mesure du pH et de régulation du pH (automatique ou manuel), par ajout d'une base (généralement de la soude), lorsque la valeur du pH mesuré est inférieure ou égale à 6, de préférence inférieure ou égale à 6,5.

Le méthane est produit lors de l'étape d), et plus particulièrement lors de la méthanogénèse. Le méthane peut être recueilli dans un gazomètre puis extrait via le gazomètre pour être valorisé.

Avantageusement, l'étape e) comprend la séparation du digestat B obtenu à l'étape d), en deux fractions F1 et F2, ladite fraction F1, optionnellement épaissie, étant soumise à une hydrolyse thermique suivi d'une détente flash de manière à obtenir un digestat C. Ledit digestat C est réintroduit dans le second réacteur à l'étape c). La séparation de l'étape e) peut être réalisée au moyen d'une presse à vis. À l'issue de la séparation de l'étape e) on obtient deux fractions : une première fraction (F1) qui est optionnellement épaissie avant d'être soumise à une hydrolyse thermique suivi d'une détente flash de manière à obtenir un digestat C ; et une seconde fraction (F2), qui n'est pas épaissie, ni soumise à une hydrolyse thermique suivi d'une détente flash et qui est le digestat D, produit final obtenu à l'issue du procédé selon l'invention. On définit ainsi un ratio massique mF1/mF2. Le ratio mF1/mF2 peut être compris dans un intervalle allant de 25 à 35 %, de préférence 30%. L'étape e) peut comprendre une sous-étape de stockage avant la séparation.

Avantageusement, la fraction (F1) séparée lors de l'étape e) représente 30 à 40 % du volume de digestat A introduit dans le second réacteur à l'étape c).

Avantageusement, l'épaississement de la première fraction (F1) de l'étape e), peut être réalisé dans une presse à vis. L'épaississement est optionnel et peut être mis en œuvre jusqu'à l'obtention d'une siccité 10 à 14 %, de préférence 12%. On entend par « siccité », la teneur en matière sèche du mélange considéré.

Avantageusement, le traitement par l'hydrolyse thermique suivi de détente flash de l'étape e) est mise en œuvre dans l'unité de traitement par hydrolyse thermique comprenant un compartiment de traitement par détente flash décrite précédemment dans le cadre de la présente invention. L'hydrolyse thermique suivie de détente flash de l'étape e) peut comprendre les sous-étapes :
i) introduction et mise sous pression dans un réacteur de mise en pression de la première fraction F1 par injection de vapeur dans le réacteur, à une pression allant de 3 à 12 bars, de préférence de 4 à 5 bars, à une température allant de 140 à 190°C, pendant une durée allant de 20 à 40 minutes,
ii) retour à la pression atmosphérique de la fraction de co-digestat B dans le susdit réacteur de mise en pression ou dans un autre réacteur, un réacteur de détente flash, et obtention du digestat C.

Avantageusement, l'étape ii) de retour à la pression atmosphérique est quasi instantanée. Il est réalisé au moyen d'une vanne, de préférence une vanne de détente à modulation.

Avantageusement, l'hydrolyse thermique suivi de détente flash de l'étape e) peut comprendre en outre une étape iii) de transfert de calorie du digestat C pour chauffer la température des intrants ou réguler la température du premier et/ou du second réacteur, de préférence au moyen d'un échangeur thermique tubulaire.

Avantageusement, le procédé selon l'invention peut comprendre en outre une étape f) de déshydratation de la fraction F2 (digestat D), suivie d'un séchage.

L'invention présente les avantages suivants, non limitatifs :
- amélioration du rendement, meilleure production de méthane pour une même quantité de matière d'intrants traitée ;
- un épaississement en amont du traitement par une hydrolyse qualifiée d'hydrolyse thermique (étape e) permet de limiter la consommation d'énergie thermique du système et améliore donc sa rentabilité énergétique ;
- un épaississement en amont du traitement par méthanogénèse (digestat C) permet un apport de matière plus concentrée dans le second réacteur mésophile et permet d'utiliser une charge appliquée supérieure et donc de limiter les besoins en volume utile ;
- amélioration significative des performances de digestion notamment grâce à la réduction du digestat B par solubilisation d'une partie des matières en suspension lors de la détente flash, stérilisation du digestat dans le réacteur de pressurisation de la détente flash, une diminution de la viscosité du digestat B octroyant un gain d'énergie au niveau du pompage en général et de l'agitation du réacteur thermophile et mésophile, amélioration de la biodégradation des intrants avec une augmentation importante du BMP ;
- augmentation de la production de biogaz (méthane) de plus de 20 % du BMP mesuré selon la norme en vigueur. ;
- amélioration de la déshydratation de la fraction solide des digestats de la fraction F2.

Avantageusement, l'étape B) du procédé selon l'invention permet la séparation du digestat D, de manière à obtenir une fraction liquide de digestat B et une fraction solide de digestat D. L'étape B) peut être réalisée au moyen d'une presse à vis ou d'une centrifugeuse. L'étape B) peut être réalisée au moyen d'une presse à vis 1131.

Avantageusement, l'étape C) du procédé selon l'invention peut comprendre les sous-étapes :
a) introduction de la fraction liquide du digestat D dans un premier réacteur comprenant un moyen d'extraction de CO₂, de préférence une colonne à garnissage ou un réacteur à barbotage ;
b) extraction de CO₂ de la fraction liquide du digestat D dans le premier réacteur, de manière à obtenir un effluent A ;
c) introduction de l'effluent A obtenu à l'étape b) dans un deuxième réacteur comprenant un réacteur à lit fluidisé optionnellement surmonté d'un décanteur ;
d) extraction de phosphore et d'azote de l'effluent A introduit dans le second réacteur à l'étape c), de manière à obtenir un effluent B et de la struvite ;
e) introduction de l'effluent B obtenu à l'étape d) dans un troisième réacteur comprenant un moyen d'extraction d'ammoniac, comprenant de préférence au moins une colonne à garnissage ou au moins un réacteur à barbotage et un laveur de gaz ;
f) extraction de l'azote, sous forme sel d'ammonium, de l'effluent B introduit dans le troisième réacteur à l'étape e), de manière à obtenir un effluent C et un sel d'ammonium.

Avantageusement, la fraction liquide résultant de l'épaississement de la fraction F1 peut être introduite en plus du digestat D à l'étape C) (et donc à la sous-étape a) de l'étape C)).

Avantageusement, le procédé selon l'invention comprend une étape a) d'introduction de l'effluent liquide dans un premier réacteur comprenant un moyen d'extraction de CO₂, de préférence une colonne à garnissage ou un réacteur à barbotage. L'étape a) du procédé selon l'invention peut être mise en œuvre au moyen d'une pompe. L'étape a) peut comprendre une sous-étape de filtration de l'effluent liquide avant son introduction dans la colonne à garnissage.

Avantageusement, le procédé selon l'invention comprend une étape b) d'extraction de CO₂ de l'effluent liquide dans le premier réacteur, de manière à obtenir un effluent A. De préférence, à l'étape b), l'effluent liquide circule à contre-courant d'un flux d'air dans la colonne à garnissage. Le flux d'air peut être une aération naturelle ou forcée. Le flux d'air peut avoir un débit volumique compris dans un intervalle allant de 50 à 500 fois le débit de l'effluent liquide. L'air peut être à température ambiante, c'est-à-dire de 5 à 35 °C. L'extraction du CO₂ de l'étape b) est ainsi réalisée par « stripping », c'est-à-dire via des transferts de masse lors d'échanges liquide-gaz dans la colonne à garnissage entre l'effluent liquide et le flux d'air, en augmentant la surface de transfert. La teneur en CO₂ de l'effluent liquide (qui est riche en CO₂ dissous) diminue lors de l'étape jusqu'à atteindre un équilibre avec celui de l'air extérieur (i.e. l'air utilisé pour le stripping).

On définit un ratio volumique (v/v) air/effluent liquide. Avantageusement, le ratio volumique (v/v) air/effluent liquide de l'étape b) peut être compris dans un intervalle allant de 50 à 500.

Avantageusement, l'effluent A obtenu à l'étape b) est appauvri en CO₂. L'effluent A contient généralement 90 % (massique) de CO₂ en moins par rapport à l'effluent liquide.

Avantageusement, le procédé selon l'invention comprend une étape c) d'introduction de l'effluent A obtenu à l'étape b) dans un deuxième réacteur comprenant un réacteur à lit fluidisé optionnellement surmonté d'un décanteur. L'étape c) du procédé selon l'invention peut être mise en œuvre au moyen d'une pompe. L'étape c) peut comprendre une sous-étape de filtration de l'effluent liquide avant son introduction dans le réacteur à lit fluidisé.

Avantageusement, le procédé selon l'invention comprend une étape d) d'extraction de phosphore et d'azote de l'effluent A introduit dans le deuxième réacteur à l'étape c), de manière à obtenir un effluent B et de la struvite. L'extraction de phosphore et d'azote est généralement réalisée par précipitation (i.e. sous forme de struvite) dans le réacteur à lit fluidisé. Typiquement, la struvite est précipitée de manière contrôlée et continue dans le deuxième réacteur à de l'effluent A via l'ajout d'une source de magnésium. De préférence, l'étape d) comprend l'addition d'une source de magnésium. La source de magnésium peut être un sel de magnésium. Le sel de magnésium peut être choisi dans le groupe comprenant Mg(OH)₂ et MgCl₂, de préférence Mg(OH)₂. L'étape d) peut comprendre en outre une sous-étape d'ajout de MgO, afin d'amorcer la cristallisation de la struvite. L'étape d) peut comprendre en outre une sous-étape de recirculation de struvite depuis le décanteur vers la partie inférieure du réacteur à lit fluidisé. Cette sous-étape de recirculation peut permettre d'optimiser le rendement de l'étape d).

Avantageusement, l'étape d) peut comprendre une sous-étape de contrôle du pH (avant ou après l'introduction de la source de magnésium), et lorsque le pH mesuré est inférieur ou égal à 8, d'ajustement du pH. Par exemple, le pH est ajusté à une valeur supérieure ou égale à 8, si celui-ci est toujours inférieur à 8 après l'addition de la source de magnésium.

Avantageusement, le procédé selon l'invention comprend une étape e) d'introduction de l'effluent B obtenu à l'étape d) dans un troisième réacteur comprenant un moyen d'extraction d'ammoniac, comprenant de préférence au moins une colonne à garnissage ou au moins un réacteur à barbotage (ou bulleur) et un laveur de gaz, agencés en série. L'étape e) du procédé selon l'invention peut être mise en œuvre au moyen d'une pompe. L'étape e) peut comprendre une sous-étape de filtration de l'effluent B avant son introduction dans le troisième réacteur.

Avantageusement, le procédé selon l'invention comprend une étape f) d'extraction de l'azote, sous forme de sel d'ammonium, de l'effluent B introduit dans le troisième réacteur à l'étape e), de manière à obtenir un effluent C et un sel d'ammonium. Typiquement, une circulation d'air (de préférence une boucle d'air en circuit fermé) traverse successivement les colonnes avant de circuler dans le laveur de gaz. L'étape f) permet ainsi un transfert de l'azote de la phase liquide (l'effluent traité lors des étapes précédentes) à la phase gazeuse (boucle d'air en circuit fermé). À la sortie des colonnes à garnissage, on obtient un effluent C (liquide) ayant une faible concentration en azote. L'effluent C peut ensuite être transféré vers une station d'épuration. On obtient également une phase gazeuse enrichie en ammoniac qui est ensuite traitée par le laveur de gaz situé en aval (dans le sens de circulation du gaz) des colonnes à garnissage, pour obtenir le sel d'ammonium.

Avantageusement, l'étape f) peut comprendre les sous-étapes :
i) extraction de l'azote sous forme d'ammoniac gazeux, de manière à obtenir un gaz A comprenant de l'ammoniac ;
ii) absorption de l'ammoniac du gaz A obtenu à l'étape i) avec une solution diluée ou non diluée d'un acide fort, de manière à obtenir une solution de sel d'ammonium.

Avantageusement, le procédé selon l'invention permet d'obtenir une solution en sel d'ammonium est suffisamment concentrée pour être revalorisée en respectant les normes applicables.

Avantageusement, l'étape i) d'extraction est réalisée au moyen de la circulation de l'effluent B, à contre-courant d'un flux d'air, successivement dans les au moins deux colonnes à garnissage agencées en série du troisième réacteur, de manière à obtenir le gaz A.

On définit un ratio volumique (v/v) air/effluent B. Avantageusement, le ratio volumique (v/v) air/effluent B de l'étape i) peut être compris dans un intervalle allant de 500 à 5000.

Avantageusement, l'étape i) peut comprendre une sous-étape d'ajustement du pH (dans une cuve infiniment mélangée). L'étape d'ajustement est optionnelle et n'est généralement mise en œuvre que lorsque la valeur du pH de l'effluent B est inférieure à 10. L'étape i) d'extraction de l'azote sous forme d'ammoniac gazeux peut comprendre les sous-étapes ordonnées suivantes :
- mesure du pH de l'effluent B ;
- optionnellement, ajustement du pH de l'effluent B à une valeur allant de 10 à 11, lorsque la valeur mesurée à l'étape précédente est inférieure à 10 ;
- ajustement de la température de l'effluent B à une température supérieure ou égale à 30°C, de préférence supérieure ou égale à 50°C ou supérieure ou égale à 65°C ;
- circulation de l'effluent B, à contre-courant d'un flux d'air, successivement dans au moins deux colonnes à garnissage, agencées en série, de manière à obtenir le gaz A.

Avantageusement, la mesure du pH peut être réalisée par tout moyen classique de mesure du pH. L'homme du métier sera en mesure de choisir la méthode de mesure du pH adaptée à chaque effluent. De préférence, le pH est mesuré par électrode. Le pH peut être ajusté par ajout de soude ou de toute autre base forte.

Avantageusement, l'ajustement de la température peut être réalisé par tout moyen classique de transfert de calories. L'homme du métier sera en mesure de choisir la méthode de régulation de la température adaptée à chaque effluent. De préférence, l'ajustement de la température est réalisé via le moyen de régulation de la température du troisième réacteur.

Avantageusement, l'étape ii) est réalisée dans le laveur de gaz. Le lavage du gaz permet le transfert de l'azote présent en phase gazeuse (gaz A) vers une phase liquide, concentrée, et ensuite sa transformation en sel d'ammonium. Le lavage du gaz est effectué en milieu acide par recirculation d'une solution acide aqueuse comprenant un acide fort. L'acide fort peut être choisi dans le groupe comprenant l'acide sulfurique, l'acide nitrique et l'acide phosphorique. De préférence, les acides sont sous forme commerciale à concentration élevée. Le produit obtenu est un produit valorisable et la voie de valorisation produit est maîtrisée et connue par l'homme du métier.

L'invention présente les avantages suivants, non limitatifs:
- La mise en place d'une étape de traitement du filtrat par stripping du CO₂ en amont de l'étape de stripping azote permet une économie substantielle de soude pour atteindre le pH optimal du procédé.
- Les rendements d'abattement de la charge azotée sont élevés, et peuvent atteindre plus de 99 % dans des conditions idéales de circulation d'air et de température.

Avantageusement, l'étape D) du procédé selon l'invention peut être réalisée au moyen d'un sécheur à bande basse température. De préférence, la température de l'étape D) est comprise dans un intervalle allant de 60 à 160°C, de préférence inférieure à 130°C. Le temps de séjour/durée de l'étape D) peut être compris dans un intervalle allant de 0.5 à 4 heures.

Avantageusement, l'étape E) du procédé selon l'invention peut être réalisée au moyen d'un four à soles multiples ou au moyen d'un four discontinu à une sole. La température de l'étape E) peut être inférieure à 1100°C, de préférence comprise dans un intervalle de température allant de à 400°C à 1000°C. Le temps de séjour/durée de l'étape E) peut être compris dans un intervalle allant de 1 heure à 5 heures, de préférence de 2 à 3 heures. A l'étape E), on définit un ratio (λ) air/gaz de combustion. Le ratio air/gaz de combustion peut aller de 0.8 à 2, de préférence il est inférieur ou égal 1.2.

Avantageusement, l'étape F) du procédé selon l'invention peut être réalisée au moyen d'un compartiment de postcombustion. Le temps de séjour de l'étape F) peut être compris dans un intervalle allant de 0 à 2 secondes. De préférence, la température de l'étape F) est inférieure à 1200°C, de préférence la température est comprise dans un intervalle allant de à 600°C à 1100°C.

Avantageusement, le procédé selon l'invention peut comprendre en outre une étape H) d'extraction de nutriments contenus dans les cendres obtenues à l'étape F). L'extraction peut être réalisée à partir de tout moyen classique, notamment de récupération de phosphate dans les cendres, lixiviation, ou traitement thermochimique.

L'invention présente les avantages suivants, non limitatifs :
- la digestion bi-étagée couplée à une boucle de recirculation équipée d'un traitement par détente flash permet de convertir au maximum la matière organique en biogaz en vue d'une injection sur le réseau de gaz naturel ;
- le traitement thermique par pyrolyse permet de convertir le reste de matière organique en chaleur et d'alimenter en énergie thermique les réacteurs de méthanisation, le sécheur, la détente flash et le stripping de l'azote ;
- l'extraction de nutriments permet de valoriser les nutriments présents en concentration importante et de générer des produits à valeur ajoutée importante ;
- absence de problèmes de râblage du digestat lors de la pyrolyse ;
- le traitement de digestion et du traitement thermique par pyrolyse permet une réduction très importante des volumes de digestats produits ainsi que leur conversion en matière minérale ;
- le dispositif et le procédé selon l'invention permettent de répondre à la future évolution de la loi prévoyant qu'un retour au sol ne sera plus possible pour boues de STEP et la fraction fermentescible des ordures ménagères à partir de 2027 ;
- la mise en place d'une étape de traitement du filtrat par stripping du CO₂ en amont de l'étape de stripping azote permet une économie substantielle de soude pour atteindre le pH optimal du procédé ;
- les rendements d'abattement de la charge azotée sont élevés, et peuvent atteindre plus de 99 % dans des conditions idéales de circulation d'air et de température ;
- l'auto-thermicité globale du dispositif sans valorisation thermique du biogaz (le méthane produit par méthanisation) et le fait que le méthane produit devient injectable sur le réseau gaz naturel en totalité ou quasi-totalité ;
- la transformation de la matière en sous-produits (gaz) et énergie (chaleur) qui peuvent être valorisable et évite tout retour au sol de la fraction organique des déchets ;
- pollution diminuée, impact du procédé sur l'environnement réduit, notamment la production très limitée de sous-produits nocifs (par exemples les gaz NOx), réduction de la volatilisation de métaux lourds, moins de risques de fusion des cendres ;
- la conversion de la matière organique des intrants en matière minérale en exploitant au maximum cette ressource pour produire de l'énergie et des nutriments, tout en limitant la génération de polluants.

Le dispositif et le procédé selon l'invention permettent une production et une injection maximale de biogaz (méthane) sur le réseau gaz naturel, une récupération et une valorisation maximale des nutriments présents dans les intrants et un inertage (i.e. la suppression de pollution accidentelle causée par un ou plusieurs produits ou réactifs mal confinés) complet des intrants (conversion en matière minérale) ainsi qu'une réduction drastique des volumes sortants, limitant les coûts de traitement sans retour au sol.

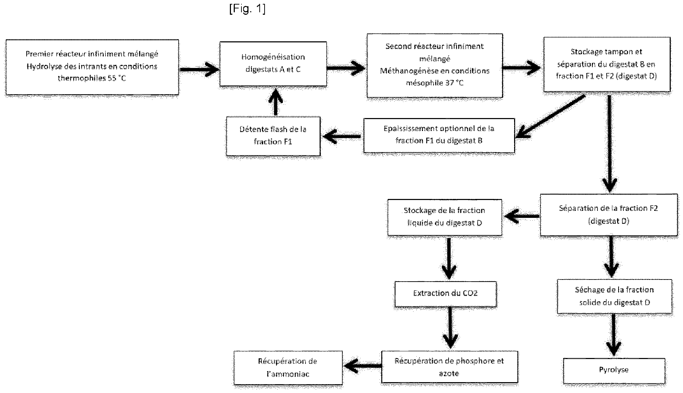

La figure 1 représente un exemple de schéma fonctionnel de mise en œuvre du procédé et l'enchainement logiquement des étapes A) à F).

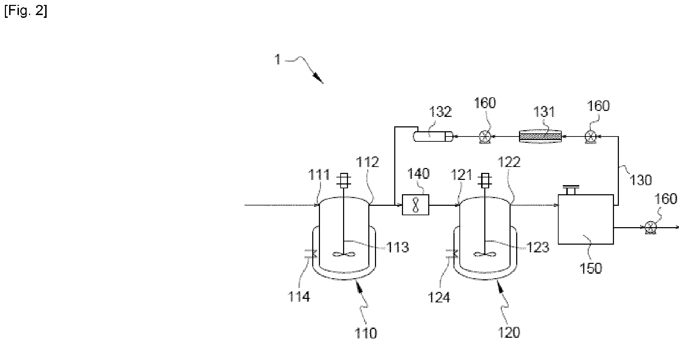

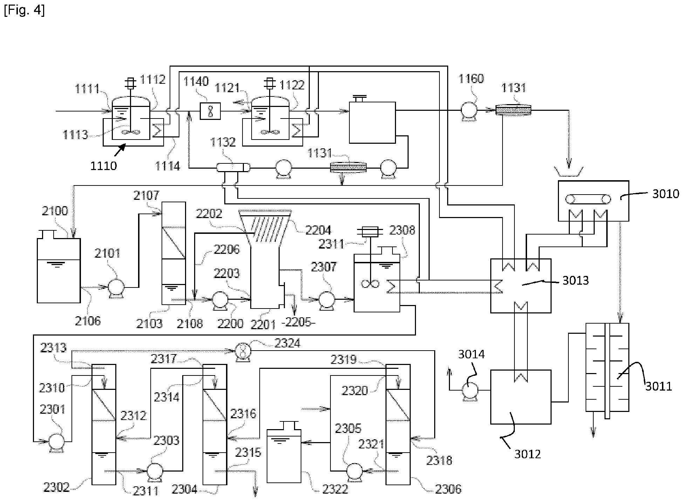

La figure 2 et la figure 4 représentent un dispositif 1 de méthanisation bi-étagé selon l'invention, comprenant un premier réacteur 110 ou 1110 comprenant une entrée 111 ou 1111, une sortie 112 ou 1112, un agitateur mécanique 113 ou 1113 et un système de chauffage 114 ou 1114, un second réacteur 120 ou 1120 comprenant une entrée 121 ou 1121, une sortie 122 ou 1122, un agitateur mécanique 123 ou 1123 et un système de chauffage 124 ou 1124, une boucle de recirculation 130 ou 1130 munie d'une presse à vis 131 ou 1131 et d'une unité de traitement par hydrolyse thermique comprenant un compartiment de traitement par détente flash 132 ou 1132, un moyen d'homogénéisation 140 ou 1140, un moyen de stockage (cuve tampon) 150 ou 1150 et un ensemble de pompes 160 ou 1160.

La figure 3 et la figure 4 représentent un dispositif 2 d'extraction de nutriments phosphore et azote contenus dans la fraction liquide d'un digestat D et/ou de la fraction liquide de la fraction F1) selon l'invention comprenant :
- un premier réacteur 10 comprenant une cuve tampon 100 ou 2100 (pour stocker l'effluent liquide) comprenant une entrée 105 ou 2105 et une sortie 106 ou 2106 (configurées pour la circulation de l'effluent liquide), une pompe 101 ou 2101 (pour acheminer l'effluent liquide dans la colonne à garnissage), un filtre 102 ou 2102, une colonne à garnissage 103 ou 2103 comprenant une entrée 107 ou 2107 et une sortie 108 ou 2108 (configurées pour la circulation de l'effluent liquide) et une entrée 109 ou 2109 et une sortie 110 ou 2110 (configurées pour la circulation du gaz), un ventilateur 104 ou 2104 ;
- un deuxième réacteur 20 comprenant une pompe 200 ou 2200 (pour acheminer l'effluent A dans le réacteur à lit fluidisé), un réacteur à lit fluidisé 201 ou 2201, surmonté d'un décanteur 202 ou 2202, une entrée 203 ou 2203 et une sortie 204 ou 2204 (configurées pour la circulation de l'effluent A), une sortie 205 ou 2205 (configurées pour extraire la struvite du réacteur), un circuit de recirculation 206 ou 2206 ;
- troisième réacteur 30 comprenant une pompe 301 ou 2301 (pour acheminer l'effluent B dans la première colonne à garnissage), une première colonne à garnissage 302 ou 2302 comprenant une entrée 310 ou 2310 et une sortie 311 ou 2311 (configurées pour la circulation de l'effluent B), une entrée 312 ou 2312 et une sortie 313 ou 2313 (configurées pour la circulation du gaz), une pompe 303 ou 2303 (pour acheminer l'effluent B dans la deuxième colonne à garnissage), une deuxième colonne à garnissage 304 ou 2304 comprenant une entrée 314 ou 2314 et une sortie 315 ou 2315 (configurées pour la circulation de l'effluent B), une entrée 316 ou 2316 et une sortie 317 ou 2317 (configurées pour la circulation du gaz), une pompe 305 ou 2305 (moyen d'extraction d'ammoniac pour extraire le liquide enrichi en sels d'ammonium du laveur), un laveur de gaz 306 ou 2306 comprenant une entrée 318 ou 2318 et une sortie 319 ou 2319 (configurées pour la circulation du gaz), une entrée 320 ou 2320 et une sortie 321 ou 2321 (configurées respectivement pour l'introduction du liquide destiné à être enrichie en sels d'ammonium et l'évacuation du liquide enrichi en sels d'ammonium), une cuve de stockage 322 ou 2322 (pour stocker le liquide enrichi en sels d'ammonium), une pompe 307 ou 2307, un réacteur infiniment mélangé 308 ou 2308 comprenant un agitateur mécanique 323 ou 2323, un système de régulation de température 325 ou 2325 et une entrée 326 ou 2326 et une sortie 327 ou 2327 (configurées pour la circulation de l'effluent B), un filtre 309 ou 2309 et un ventilateur 324 ou 2324.

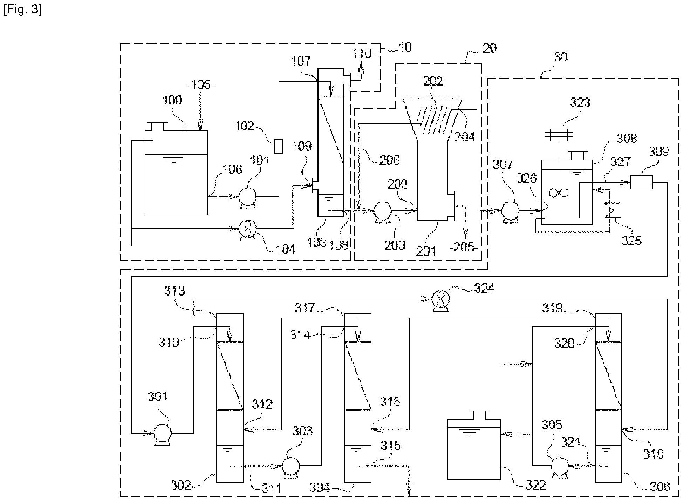

La figure 4 représente plus particulièrement un dispositif de traitement d'intrants selon l'invention comprenant un dispositif 1 de méthanisation bi-étagé tel que décrit sur la figure 2 relié à un dispositif 2 d'extraction de nutriments phosphore et azote dispositif tel que décrit sur la figure 3 et à un dispositif 3 comprenant :
- un séparateur 1131 ;
- un moyen de séchage 3010 ;
- un pyrolyseur 3011 comprenant un compartiment de postcombustion 3012 relié au dispositif de digestion de méthanisation bi-étagé, au dispositif d'extraction et/ou au moyen de séchage via un système de transfert de calories 3013, et
- un ventilateur d'extraction 3014.

L'invention sera mieux comprise à la lecture des exemples, non limitatifs, qui suivent.

### Exemple 1 :

### EXEMPLE 1.A

### A. Matériel et méthode

Le procédé de l'invention a été réalisé sur un mélange d'intrants représentatif constitué des éléments suivants (en matière sèche, MS) :
- 80 % de fraction organique de déchets ménagers (fraction 0 à 10 mm criblée, provenance Chagny) ;
- 20 % de boues biologiques non digérées (provenance usine Seine Aval) ;
- Concentration cible du mélange de 100 gMS/L.
Les boues traitées sont caractérisées par les paramètres spécifiques suivants :

**Tableau 1 : caractéristiques des boues traitées.**

| Paramètre | Boues biologiques non digérées provenant de l'usine de Seine Aval (SIAAP) |
|---|---|
| Humidité (%) | 95,4 |
| Teneur en MS (%) | 4,58 |
| Teneur en MO (% MS) | 84,6 |
| DCO (g/gMS) | 1,711 |
| BMP expérimental (NLCH4/kgMS) | 292 |

La fraction organique de déchets ménagers (FOR) traitée est caractérisée par les paramètres spécifiques suivants :

**Tableau 2 : caractéristiques de la FOR traitée.**

| Paramètre | Valeur |
|---|---|
| Humidité (%) | 53,7 |
| Teneur en MS (%) | 46,31 |
| Teneur en MO (% MS) | 66,19 |
| DCO (g/gMS) | n.d. |
| BMP expérimental (NLCH4/kgMS) | 217 |

Le procédé a été mis en œuvre avec les quantités suivantes :

**Tableau 3 : quantités mises en œuvre.**

| | | |
|---|---|---|
| Concentration essai | 100 | g/L |
| Quantité de MS jour | 250,00 | g/jour |
| Pourcentage MS provenant de la FOR | 80 | % |
| Pourcentage MS provenant des boues | 20 | % |
| Quantité de MS provenant de la FOR | 200,00 | gMS/jour |
| Quantité de MS provenant des boues | 50,00 | gMS/jour |
| Concentration MS dans la FOR | 46 | % |
| Concentration MS boues | 45,80 | g/L réel |
| Matière brute nécessaire boues | 1,09 | litres boues/jour |
| Matière brute nécessaire FOR | 431,97 | gMBFOR/jour |
| Densité FOR | 0,55 | t/m³ |
| Volume FOR | 0,79 | litres FOR |
| Volume total intrants | 1,88 | litres |
| Complément eau pour atteinte concentration cible | 0,62 | litres |
| **Concentration cible (rappel)** | **100,00** | **g/L** |
| Matière brute totale boues pour essai | 6,55 | litres/essai |
| Matière brute totale FOR pour essai | 2,59 | kgMBFOR/essai |

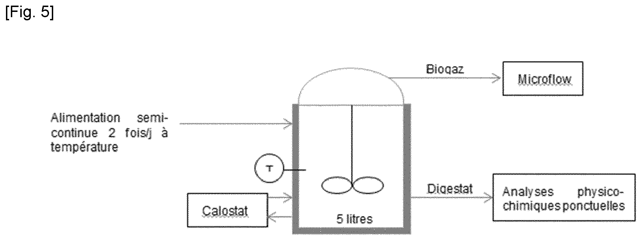

Le premier réacteur (thermophile) est représenté sur la figure 5.

Les caractéristiques techniques du premier réacteur sont les suivantes :
- Volume utile du réacteur : 5 litres ;
- Système d'agitation à pales (CSTR) ;
- Dispositif de chauffage par double paroi avec système de régulation associé ;
- 1 port sortie gaz et 6 ports alimentation ;
- Débitmètre autonome Microflow (gamme de mesure de 20 à 4 000 mL/h) et système d'acquisition multivoies.

Le second réacteur (mésophile) est constitué des mêmes éléments que le premier réacteur et est placé en série.

Les caractéristiques techniques de l'unité de traitement par hydrolyse thermique comprenant un compartiment de traitement par détente flash sont les suivantes :
- un réacteur batch de mise en pression de 2,5 litres équipé d'un système de chauffage à l'huile thermique et d'un agitateur ;
- un réacteur de détente flash muni d'une vanne pour mise à l'atmosphère ;
- un dispositif de chauffage à l'huile thermique avec un maximum de 180 °C ;
- un système de régulation de température ;
- les tuyauteries de transfert, la robinetterie et l'instrumentation ad hoc.

### B. Résultats obtenus :

### a) Hydrolyse en conditions thermophiles :

L'hydrolyse est réalisée sur les intrants décrits ci-dessus. Le temps de séjour dans le premier réacteur est fixé à 2 jours. La température d'hydrolyse est de 55 °C.

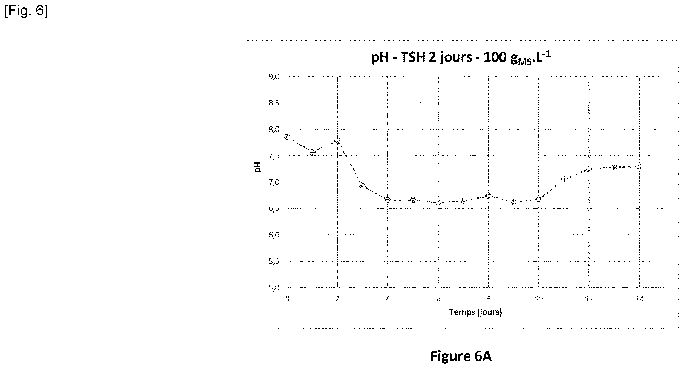

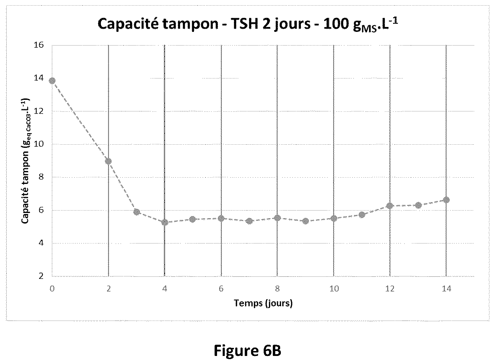

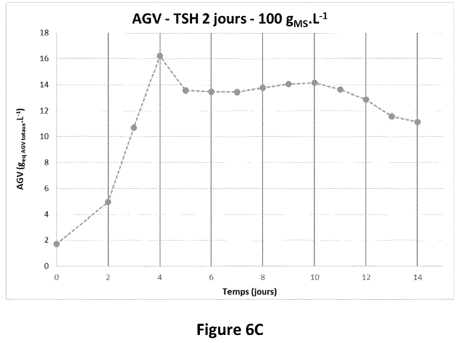

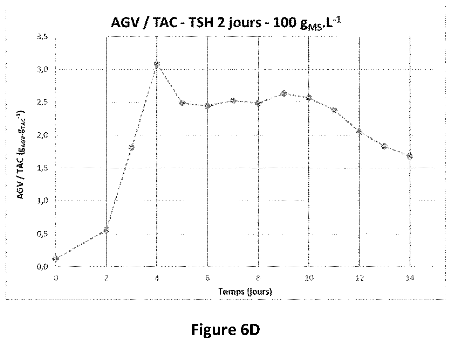

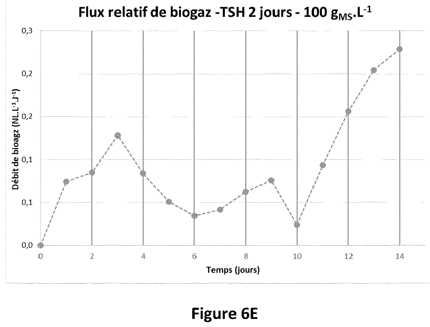

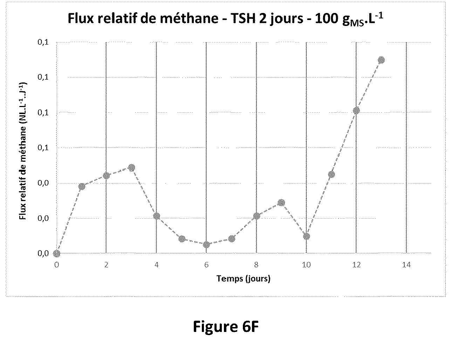

Le suivi de la réaction permet l'établissement des courbes présentées sur la figure 6 On observe une stabilisation du pH (Figure 6A) autour de 6,5 grâce à une consommation du pouvoir tampon qui atteint une asymptote à 6 g/L (Figure 6B). La production d'AGV augmente fortement (Figure 6C) et atteint 14 g/L. Le suivi de la production de biogaz (Figure 6E) et de sa teneur en méthane ((Figure 6F) indique une relativement faible production de biogaz par rapport au second réacteur, ce qui est cohérent avec l'étape d'hydrolyse recherchée. Le premier réacteur permet donc une hydrolyse efficace de la matière organique introduite.

Cette première étape permet d'obtenir un digestat A ayant une concentration en AGV de l'hydrolysat de 14 gAGV/L et un pouvoir tampon de 6 g/L. Le pH est stabilisé à une valeur de 6,5.

### b) Méthanogenèse en conditions mésophiles :

La méthanogénèse est réalisée dans un premier temps sur du digestat A obtenu après la réaction d'hydrolyse. Le réacteur de méthanogénèse permet d'atteindre un temps de séjour de 15 jours à une température stable de 37 °C.

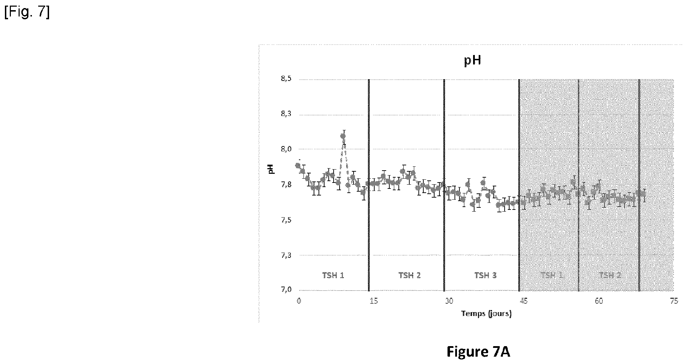

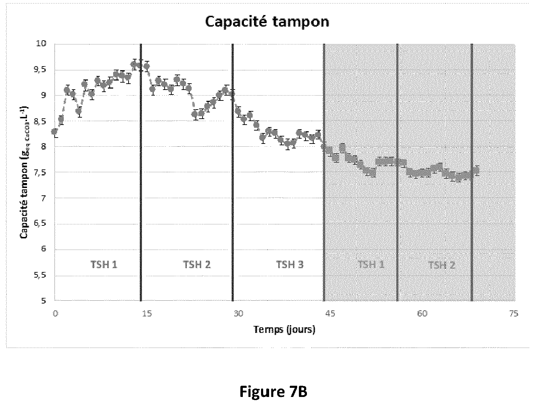

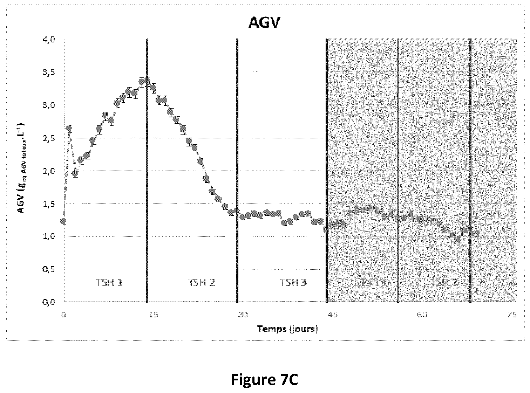

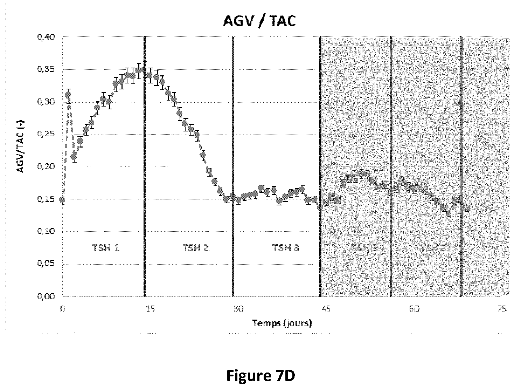

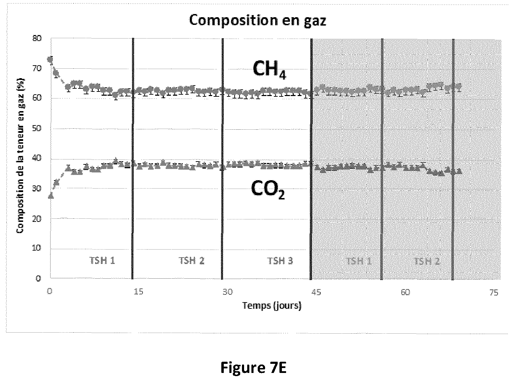

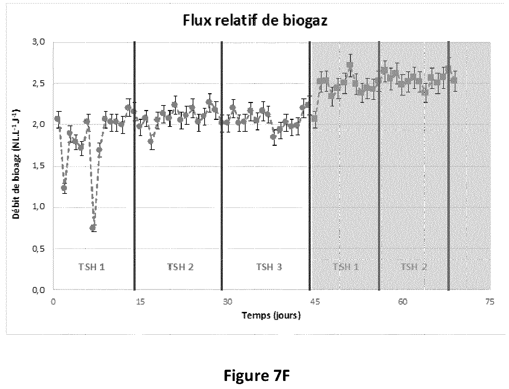

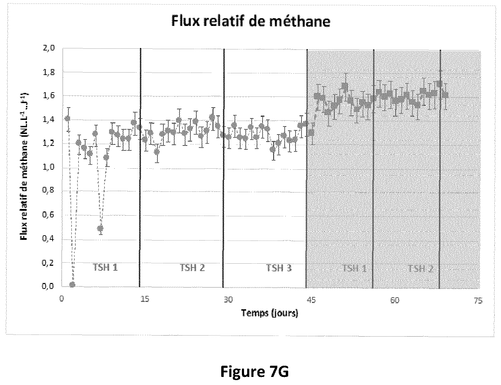

Les résultats de suivi des réacteurs sont présentés dans la figure 7 On observe un pH stable autour d'une valeur d'environ 7,5-8 (Figure 7A), une stabilisation de la capacité tampon à environ 6-7 g/L (Figure 7B) et une production de biogaz (Figure 7G) stabilisée avec une teneur en méthane de l'ordre de 65 % également stable (Figure 5F et Figure 7E). La production d'AGV (Figure 7C) se stabilise au bout de 2 THS et reste relativement faible au regard du premier réacteur, évitant ainsi la variation de pH susceptible d'inhiber l'activité bactérienne La productivité du système atteint 267 NL_{CH4.}kg_{MVS}⁻¹, soit 88,6 % de la valeur cible du BMP

Le second réacteur de méthanogenèse est ensuite alimenté avec un mélange de digestat A, obtenu après la réaction d'hydrolyse, et de digestat C, issu du traitement dans l'unité de détente flash d'un batch de digestat B obtenu précédemment. Le ratio MS_{digestat C}/MS_{digestat A} du mélange soumis à la méthanogénèse est égal à 30 %.

La méthanogénèse est réalisée sur un mélange de digestat A obtenu après la réaction d'hydrolyse, et de digestat C, issu du traitement dans l'unité de détente flash d'un batch précédent (165 °C, 5 bars). Le réacteur de méthanogénèse permet d'atteindre un temps de séjour de 15 jours à une température stable de 37 °C. Le ratio V_{digestat C}/V_{digestat A} du mélange soumis à la méthanogénèse est égal à 30 % en matière sèche.

Le suivi de la production biogaz (Figure 7F en zone grise) et de méthane (Figure 7G en zone grise) indique une réaction favorable et quasi instantanée du milieu à l'apport du nouveau mélange et une conservation du rendement de dégradation des MV et MVS (Figure 5H).

La productivité du réacteur mésophile atteint 331 NLC_{H4}.kg_{MVS}⁻¹, soit 110 % de la valeur cible du BMP. Ainsi la comparaison directe avec le procédé témoin (digestat A uniquement) démontre les avantages du procédé selon l'invention.

### EXEMPLE 1.B

Dans cet exemple, un procédé témoin (hors invention, pas de détente flash, MS_{digestat C}/MS_{d}i_{gestat A} = 0) est comparé à la mise en œuvre du procédé selon l'exemple 1.A, dans laquelle les paramètres de détente flash ont été variés de la manière suivante : pression de 5 bars, température variant de 140 à 165 °C.

**Tableau 4 : comparaison des résultats obtenus du procédé mis en œuvre selon l'invention et d'un témoin (hors invention, sans hydrolyse thermique suivie de détente flash).**

| | **SM (témoin digestat B)** | **Digestat C traité à 165 °C** | **Digestat C traité à 140 °C** | **Digestat C traité à 150 °C** |
|---|---|---|---|---|
| **Moyenne (Nm³_{CH4}.t_{MVS}⁻¹)** | 173,2 | 398,2 | 372,2 | 339,8 |
| **Minimum (Nm³_{CH4}.t_{MVS}⁻¹)** | 171,8 | 396,2 | 357,2 | 331,5 |
| **Maximum (Nm³_{CH4}.t_{MVS}⁻¹)** | 174,4 | 400,1 | 394,2 | 347,0 |
| **Écart-type (Nm³_{CH4}.t_{MVS}⁻¹)** | 1,3 | 2,8 | 19,5 | 7,8 |
| **CV (%)** | 0,8 | 0,7 | 5,2 | 2,3 |

La caractérisation physico-chimique du digestat B et C est la suivante :

**Tableau 5 : Caractérisation physico-chimique du digestat B et C dans différentes conditions de traitement par détente flash.**

| **Témoin (digestat B non traité)** | | | | | |
|---|---|---|---|---|---|
| | **Minimum** | **Maximum** | **Moyenne** | **Écart-type** | **CV (%)** |
| **MS (%_{MB})** | 6,32 | 6,45 | 6,64 | 0,44 | 6,68 |
| **MVS (%_{MS})** | 58,7 | 63,3 | 61,6 | 2,5 | 4,1 |
| **MVS (%_{MB})** | 3,71 | 4,08 | 4,09 | 1,1 | 0,27 |
| **pH** | 7,64 | 7,76 | 7,72 | 0,07 | 0,85 |
| **NH₄⁺(g.kg_{MB}⁻¹)** | 2,77 | 2,95 | 2,86 | 0,09 | 3,15 |

| **Digestat C traité à 140 °C** | | | | | |
|---|---|---|---|---|---|
| | **Minimum** | **Maximum** | **Moyenne** | **Écart-type** | **CV (%)** |
| **MS (%_{MB})** | 3,32 | 3,46 | 3,39 | 0,07 | 2,09 |
| **MVS (%_{MS})** | 66,1 | 66,4 | 66,2 | 0,2 | 0,3 |
| **MVS (%_{MB})** | 2,19 | 2,30 | 2,24 | 0,014 | 0,01 |
| **pH** | 9,79 | 9,81 | 9,80 | 0,01 | 0,11 |
| **NH₄⁺(g.kg_{MB}⁻¹)** | 2,06 | 2,13 | 2,10 | 0,04 | 1,80 |

| **Digestat C traité à 150 °C** | | | | | |
|---|---|---|---|---|---|
| | **Minimum** | **Maximum** | **Moyenne** | **Écart-type** | **CV (%)** |
| **MS (%_{MB})** | 3,70 | 3,79 | 3,76 | 0,05 | 1,23 |
| **MVS (%_{MS})** | 54,5 | 66,4 | 66,4 | 0,1 | 0,1 |
| **MVS (%_{MB})** | 2,02 | 2,52 | 2,50 | 0,005 | 0,00 |
| **pH** | 9,62 | 9,65 | 9,64 | 0,01 | 0,15 |
| **NH₄⁺(g.kg_{MB}⁻¹)** | 2,22 | 2,34 | 2,29 | 0,06 | 2,58 |

| **Digestat C traité à 165 °C** | | | | | |
|---|---|---|---|---|---|
| | **Minimum** | **Maximum** | **Moyenne** | **Écart-type** | **CV (%)** |
| **MS (%_{MB})** | 2,76 | 2,81 | 2,78 | 0,02 | 0,89 |
| **MVS (%_{MS})** | 72,0 | 72,3 | 72,1 | 0,1 | 0,2 |
| **MVS (%_{MB})** | 1,99 | 2,03 | 2,00 | 0,002 | 0,00 |
| **pH** | 9,57 | 9,62 | 9,60 | 0,02 | 0,25 |
| **NH₄⁺(g.kg_{MB}⁻¹)** | 2,13 | 2,27 | 2,20 | 0,08 | 3,48 |

La recirculation d'un ratio mF1/mF2 de 30 % de MS traitée par détente flash selon le procédé de l'invention permet dans tous les cas une augmentation de la productivité en méthane de l'invention.

Le dispositif de l'invention permet ainsi d'améliorer la productivité en méthane d'une installation de production de méthane en digestion bi-étagé.

### Exemple 2 : mise en œuvre du procédé selon l'invention

### A. Matériel et méthode

L'effluent liquide est un jus (fraction liquide) récupéré en sortie de presse à vis à l'issue d'un procédé de méthanisation. L'effluent en entrée de méthanisation était constitué des éléments suivants :
- 80 % de fraction organique de déchets ménagers (fraction 0 à 10 mm criblée) ;
- 20 % de boues biologiques non digérées ;

L'effluent liquide est un filtrat de 600 ml, à pH 8 avec un teneur en matière sèche de 0,45%. Le filtrat est filtré sur tamis d'une maille de 500 µm pour avoir une teneur en matière en suspension (MES) < 1 gMES/L.

Le dispositif utilisé pour la mise en œuvre de cet exemple est un dispositif selon l'invention modélisé en laboratoire, aux dimensions réduites.

Le premier réacteur comporte un bulleur d'un volume de 1 L et comprend 600 mL d'effluent liquide et un débit d'air inférieur à 5 L/min le traverse.

Le second réacteur comprend un réacteur à lit fluidisé (Bêcher agité) de dimensions 1 L et comprend 500 ml d'effluent A.

Le troisième réacteur comprend un bulleur de dimensions 1 L contenant 250 ml d'effluent B avec un débit d'air traversant inférieur à 3 L/min, et un laveur de gaz constitué d'un bulleur de dimension IL et contenant 250 ml d'une solution d'acide sulfurique à pH < 3.

### Extraction de CO₂ de l'effluent liquide dans le premier réacteur (étapes a) et b) du procédé selon l'invention)

Afin d'éliminer le CO₂ présent dans le l'effluent liquide, un système de barbotage en circuit ouvert est mis en place dans le premier réacteur.

600 ml d'effluent liquide sont préalablement filtrés sur tamis d'une maille de 500 µm pour avoir une teneur en matière en suspension (MES) < 1 gMES/L.

Puis, ils sont introduits dans le premier réacteur. Un flux d'air est bullé dans le réacteur. Le débit moyen d'air traversant le barboteur est inférieur à 5 L/min. La durée de l'extraction est supérieure à 30 minutes. Les mesures de pH sont effectuées en parallèle avec un pH-mètre au cours du temps afin de suivre l'évolution du pH en fonction de l'élimination du CO₂.

On obtient un effluent A, appauvri en CO₂. Le pH de l'effluent A est égal à 9, et a augmenté d'une unité grâce à cette étape (voir B. Résultats).

### Extraction de phosphore et d'azote (sous forme de struvite) de l'effluent A (étapes c) et d) du procédé selon l'invention)

L'effluent A a été caractérisé afin de déterminer sa concentration initiale en phosphate, ammonium et magnésium. Suite à l'analyse physico-chimique de l'effluent A, les quantités de réactif à ajouter ont été calculées en fonction des ratios massiques Mg/P désirés.

Un volume d'effluent A de 500 mL est introduit dans le second réacteur. Le réactif Mg(OH)₂ est ajouté à l'effluent A afin d'obtenir un ratio Mg/P de 1,4, puis le mélange est mis sous agitation.

Le pH est ajusté à une valeur d'environ 8,2 par ajout d'une solution de soude concentrée à 32% (massique).

Le mélange est mis sous agitation pendant une durée supérieure à 4 heures (afin de simuler le lit fluidisé). Le milieu réactionnel est ensuite laissé au repos pendant une durée supérieure à 12 heures (afin de simuler l'action du décanteur).

Une analyse ionique par Dionex est ensuite effectuée sur le surnageant afin de déterminer le bilan matière en fin de réaction et de calculer le rendement de précipitation du phosphore et de l'azote.

On obtient un effluent B, et de la struvite.

### Extraction de l'azote (sous forme de sel d'ammonium) de l'effluent B (étape e) et f) du procédé selon l'invention)

L'effluent B à pH 8,2 est introduit dans le troisième réacteur.

Le pH de l'effluent B est ajusté in situ dans le réacteur à 10 pH à l'aide de soude à 30% massique.

Le barbotage en circuit fermé consiste à effectuer des essais de barbotage pour simuler le stripping à l'air en circuit fermé, dans le but de définir les rendements atteignables et les paramètres tels que le pH, la température et les ratios volumiques air/liquide.

Pour cela, il s'agit d'effectuer des essais en mettant en série et en boucle fermée en air :
- Un barboteur de 1 L contenant 250 ml le filtrat à stripper ;
- Un barboteur de 1 L contenant 250 ml de l'acide sulfurique en excès (pH < 3) ;
- Une pompe pour la circulation de l'air à un débit inférieure à 3 L/min ;

Les deux barboteurs sont placés dans un bain marie afin de maintenir une température constante et maîtrisée D comprise entre 30 et 50 °C. On obtient un effluent C et du sulfate d'ammonium avec un abattement supérieur à 60%.

### B. Résultats

### Extraction du CO2

Afin de déterminer l'impact de l'extraction du CO₂ sur l'effet tampon de l'effluent liquide, des titrations ont été effectuées après différents temps de barbotage lors de la mise en œuvre de l'étape b).

Des prélèvements liquides de 50 mL sont effectués afin de définir l'impact de l'élimination du CO₂ sur la consommation de soude.

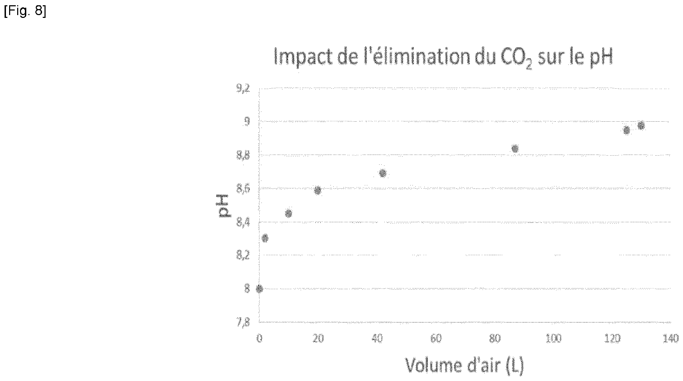

Un dosage pH-métrique des échantillons est effectué. L'évolution du pH et de la température de l'échantillon au cours de l'étape b) est renseignée sur la figure 8.

La mise en œuvre de l'étape b) du procédé a permis de gagner une unité pH sur l'effluent A, dont le pH est de 9 (par rapport à l'effluent liquide, dont le pH n'était que de 8.

Cette augmentation de pH va permettre une économie significative de soude dans les étapes ultérieures d) et f).

### Détermination de l'impact du CO₂ sur l'effet tampon de l'effluent liquide.

Les résultats présentés sur la figure 4 présentent l'évolution du pH de l'effluent liquide en fonction du volume de soude titré pour trois échantillons ayant subi un temps de barbotage différent. Les résultats présentés sur la figure montrent que l'augmentation du temps de barbotage du filtrat entraîne une diminution de la consommation de soude pour un pH cible.

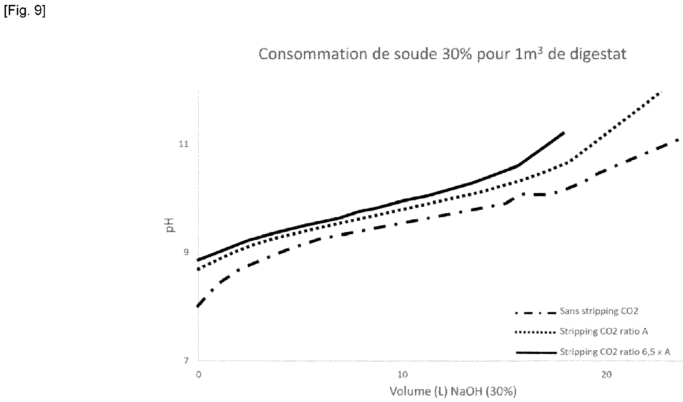

La figure 9 représente les résultats obtenus sur le stripping de CO₂ dans le cadre de cet essai, pour un ratio volumique air/liquide R_{A} compris entre 50 et 500.

Dans le tableau 6 ci-dessous, on compare les gains en pourcentages volumiques lors de la mise en œuvre du procédé sans extraction de CO₂, et avec extraction avec un ratio R_{A} ou un ratio de 6,5 x R_{A}:

**tableau 6 : comparatif sans stripping (extraction), avec ratio R_{A} et ratio 6,5 x R_{A}.**

| | Sans stripping de CO₂ | Ratio R_{A} | | Ratio 6,5 x R_{A} | |
|---|---|---|---|---|---|
| pH cible | Conso. (L/m³⁾ | Conso. (L/m³⁾ | Gain % | Conso. (L/m³⁾ | Gain% |
| 9 | 4 | 2,5 | 37% | 1 | 75% |
| 11 | 24 | 19 | 21% | 17 | 29% |

Ces résultats montrent que l'étape b) du procédé permet une économie substantielle en réactif (soude) en vue d'atteindre un pH optimal pour les étapes subséquentes d'extraction de phosphore et d'azote (sous forme de struvite et d'ammonium).

### Influence de la température et du ratio air/liquide sur la capacité d'élimination de l'ammonium

Dans cet exemple, on a comparé l'efficacité d'extraction (étape f) du procédé selon l'invention de l'ammoniac sur l'effluent B.

Pour les essais, lorsque le pH a été rehaussé, il avait une cible pH_{B} égal à 10

Le ratio volumique air/liquide R_{C} est quant à lui compris entre 500 et 2500.

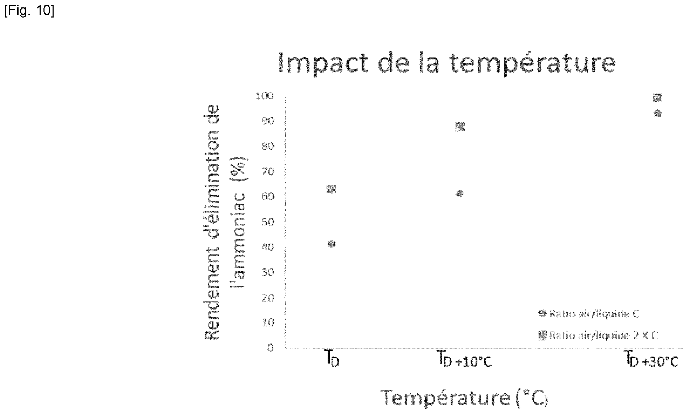

La figure 10 montre l'impact de la température qui a été étudiée en fixant le premier point à une température T_{D} comprise entre 30 et 50°C, le point suivant correspond à T_{D} +10°C et le dernier à T_{D} +30°C.

La figure 10 montre également que lors des études des facteurs température et ratios air/liquide, il y a 2 courbes correspondant à des ratios air/liquide différents. Dans les deux cas la courbe ■ dont le ratio air/liquide est 2 fois supérieur au ratio air/liquide de la courbe ●, se situe au-dessus de la courbe ●.

Ceci confirme l'importance de ce facteur sur le rendement d'élimination de l'ammoniac.

En plus de l'impact positif de l'étape b) d'extraction de CO₂, les paramètres de ratio air/liquide et température permettent d'améliorer le procédé.

Plus la température du traitement augmente, plus le rendement du procédé augmente, quel que soit le ratio air/liquide. On observe cependant qu'un pH plus élevé permet l'atteinte de meilleurs rendements d'abattement de l'ammonium, mais nécessite aussi une plus grande consommation de soude.

Enfin, pour de mêmes conditions de pH et de température, plus le ratio air/liquide augmente, plus le rendement d'abattement atteint est important.

L'ensemble de ces résultats obtenus mettent en avant différents points. L'élimination du CO₂ est un réel avantage pour la réduction les dépenses d'exploitation du procédé d'extraction de nutriments, notamment par la forte réduction de la consommation de soude. Ces résultats ont permis de démontrer un gain de plus de 30 % de la consommation de soude entre un effluent traité selon le procédé de l'invention et un effluent traité de manière traditionnelle. Il est possible d'atteindre expérimentalement des rendements d'abattement très élevés sur l'ammonium dès pH = 10 : on obtient ainsi un rendement de plus de 99 % avec un ratio de circulation d'air de 2000 % et une température de 67 °C.

Le filtrat est très fortement tamponné et l'extraction du CO₂ ou « stripping » permet de réduire de manière significative la consommation de soude.

L'élimination physique du CO₂ dissous est un préalable indispensable si l'on veut économiser le réactif alcalin. Des rendements d'abattement supérieurs à 60 % peuvent être obtenus.

### Exemple 3 : pyrolyse et postcombustion

432 kg de la fraction solide du digestat D obtenu à l'issue de l'Exemple 1 (siccité ∼ 30%) sont séchés dans une étuve munie de huit claies, capable de sécher jusqu'à 100 à 150 litres de digestat brut à une température d'environ 105°C.

Le digestat D à sécher est extrudé puis réparti en lit ouvert sur les claies perforées de l'étuve. Ce protocole est représentatif de ce que l'on obtiendrait dans un sécheur convectif à échelle industrielle.

Après 24 heures de séchage, la siccité du digestat est mesurée sur un échantillon moyen, à des fins de vérification. 120 kg de produit sec sont récupérés. La siccité mesurée l'échantillon après 24 heures de séchage est de 82%.

Environ 20 kg de cette fraction solide séchée sont introduits dans un pyrolyseur de type discontinu à une sole d'un diamètre de 18 pouces, permettant de modéliser le pyrolyseur à échelle industrielle.

Le pyrolyseur est mis en température la veille de l'essai (soit environ 12 heures avant). Une fois la température stabilisée au sein du pyrolyseur, l'échantillon y est introduit. Il est maintenu à température constante pendant toute la durée du traitement thermique de la fraction solide du digestat séché.

Au terme du traitement thermique, l'échantillon est extrait du four et des mesures de taux de cendre, matière volatile et PCS sont réalisées.

Le tableau ci-dessous reprend les paramètres opératoires pour les différents traitements thermiques réalisés.

**tableau 7 : étape E) de pyrolyse ou traitement thermique remplaçant l'étape E) (essais comparatifs).**

| **Traitement thermique** | **Température de maintien** | **Temps de maintien** | **Quantité de matière** | **Atmosphère** |
|---|---|---|---|---|
| **Torréfaction 1** (comparatif) | 280°C | 2 h | 3,7 kg | Réductrice (λ = 0,85) |
| **Torréfaction 2** (comparatif) | 320°C | 2 h | 3,5 kg | Réductrice (λ = 0,85) |
| **Carbonisation 1** (comparatif) | 550°C | 2 h | 3,5 kg | Réductrice (λ = 0,85) |
| **Pyrolyse 1** | 900°C | 3 h | 3,8 kg | Oxydante (λ = 1,2) |
| **Pyrolyse 2** | 950 °C | 3 h | 5 kg | Oxydante (λ = 1,2) |

Les traitements thermiques de torréfaction et de carbonisation ont été menés sur une durée de deux heures. Des mesures d'humidité, matières volatiles, taux de cendres et PCS ont également été réalisées sur ces échantillons.

Le coefficient λ est le rapport du volume d'air réellement utilisé et du volume d'air strictement nécessaire pour une combustion franche. Les atmosphères réductrices (respectivement oxydantes) sont donc caractérisées par un coefficient λ < 1 (respectivement > 1).

### Résultats

Les échantillons sont soumis à des analyses pondérales par XRF (spectrométrie de fluorescence aux rayons X) pratiquée sur les résidus solides issus des deux essais de pyrolyse. Les teneurs sont indiquées en pourcentages massiques. L'analyse des cendres dans les échantillons traités relève des teneurs importantes en silice et en alumine. La teneur en oxyde de calcium est assez élevée (30 %), de même pour le fer (7 % de Fe₂O₃). La présence de ces quatre éléments suggère la valorisation potentielle de ces cendres, notamment dans le secteur de la construction. La teneur en chlore (0,33%) et en soufre (1,25 %) est basse, ce qui est un avantage complémentaire pour ce type de valorisation.

Les analyses de XRF révèlent en outre une teneur en phosphore importante : soit environ 10 % de P₂O₅ dans les cendres.

Le tableau 8 ci-dessous détaille la composition des cendres pour les essais pyrolyse 1 et 2 du tableau 1 :

**Tableau 8 : résultats d'analyse XRF des cendres pour les essais pyrolyse 1 et 2.**

| **Composé** | **Résidu pyrolyse 1** | **Résidu pyrolyse 2** |
|---|---|---|
| **Na₂O** | 1,07 | 1,06 |
| **MgO** | 2,85 | 3,3 |
| **Al₂O₃** | 9,5 | 10,7 |
| **SiO₂** | 21,3 | 25,1 |
| **P₂O₅** | 9,22 | 10,3 |
| **S** | 1,25 | - |
| **SO₃** | - | 3,31 |
| **Cl** | 0,33 | 0,24 |
| **K₂O** | 1,71 | 1,85 |
| **CaO** | 28,6 | 29,6 |
| **TiO₂** | 0,77 | 0,74 |
| **MnO** | 0,23 | 0,1 |
| **Fe₂O₃** | 7,23 | 6,86 |
| **CuO** | 0,08 | 0,07 |
| **ZnO** | 0,18 | 0,17 |
| **PbO** | < 0,05 | < 0,05 |

Il est démontré qu'il est possible d'obtenir une minéralisation quasi complète de la fraction solide du digestat B, en mettant en œuvre l'étape E) du procédé, avec un temps de séjour de l'ordre de 2 heures en régime industriel.

Le résidu minéral de la pyrolyse peut en outre faire l'objet d'une ou plusieurs valorisation(s) secondaires :
- valorisation du phosphore, par exemple par extraction et réincorporation dans la chimie des engrais,
- valorisation des éléments résiduels dans le secteur de la construction.

Le tableau 9 ci-dessous indique les caractéristiques globales des produits brut (digestat séché) et après traitement (pyrolyse).

**tableau 9 : caractéristiques globales (Humidité, Matière volatile (MV) / Matière sèche (MS), Carbone fixe / MS, Cendre / MS, Pouvoir calorifique supérieur (PCS) mesuré (kJ/kg) des produits bruts et après traitement.**

| **Digestat mix restreint** | **Humidité** | **MV / MS** | **Carbone fixe / MS** | **Cendre / MS** | **PCS mesuré (kJ/kg)** |
|---|---|---|---|---|---|
| **Produit brut** | 25% | 52,5% | 18,6% | 28,9% | 10 900 |
| **Produit torréfié 1 (comparatif)** | 0% | 52% | 9,1% | 38,9% | 11 700 |
| **Produit torréfié 2 (comparatif)** | 0% | 37% | 14% | 49% | 15 200 |
| **Produit carbonisé (comparatif)** | 0% | 21,1% | 13,8% | 65,1% | 9 500 |
| **Produit pyrolysé 1** | 0% | 0% | 2,7% | 97,3% | < 500 |
| **Produit pyrolysé 2** | 0% | 0% | 0,1% | 99,9% | < 500 |

Les résultats obtenus démontrent le transfert de matières volatiles et donc d'énergie chimique de la phase solide vers la phase gazeuse lorsque l'on augmente la température du traitement thermique, ce qui signifie une récupération d'énergie disponible via combustion de ces gaz.

Une autre conséquence de la mise en œuvre d'une pyrolyse par rapport à un traitement thermique classique, ou par rapport à une torréfaction, est la diminution de la quantité de produit solide. Cette augmentation de température entraîne la gazéification des matières volatiles dans un premier temps et, à plus haute température, celle du carbone fixe.

La mise en œuvre de l'étape E) selon l'invention permet ainsi de limiter au maximum la quantité de résidu solide et donc de maximiser la quantité de matière qui est ensuite traité dans l'étape F). Ces résultats ont permis d'estimer la quantité de calories produite par l'étape F). On obtient ainsi une puissance estimée récupérable à l'issue de l'étape F) de 3,46 kWh/kg de matière entrante dans à l'étape F), ce qui permet une régulation de la température du dispositif de méthanisation bi-étagée de l'exemple 1 pendant une journée, par transfert des calories produites par l'étape F) de combustion pour un équivalent matière d'environ 16,6 kg d'intrants brut à 100 g/l à 11°C porté au 55°C dans l'exemple 1.

## Revendications

1. Dispositif de traitement d'intrants organiques, de préférence un mélange d'une fraction organique des déchets ménagers, des boues, et éventuellement des fumiers et de graisses, comprenant :
- un dispositif de méthanisation bi-étagé ;
- un dispositif d'extraction de nutriments choisis parmi au moins un élément sélectionné entre le phosphore et l'azote contenus dans un effluent liquide, ledit effluent étant de préférence la fraction liquide issue de la déshydratation d'un digestat d'un mélange d'une fraction organique des déchets ménagers, et éventuellement des fumiers et de graisses ;
- un séparateur (1131) ;
- un moyen de séchage (3010) ;
- un pyrolyseur (3011) comprenant un compartiment de postcombustion.

2. Dispositif selon la revendication 1, dans lequel le compartiment de postcombustion est relié au dispositif de digestion de méthanisation bi-étagé, au dispositif d'extraction et/ou au moyen de séchage via un système de transfert de calories.

3. Dispositif selon la revendication 1 ou 2, dans lequel le dispositif de méthanisation bi-étagé comprend :
- un premier réacteur (110, 1110) infiniment mélangé ;
- un second réacteur (120, 1120) infiniment mélangé, ledit second réacteur étant muni d'une boucle de recirculation (130, 1130) comprenant une unité de traitement par hydrolyse thermique comprenant un compartiment de traitement par détente flash (132, 1132), ladite boucle étant relié d'une part à la sortie du second réacteur et d'autre part à l'entrée du second réacteur ;
lesdits premier (110, 1110) et second réacteurs (120, 1120) étant agencés en série.

4. Dispositif selon des revendications 1 à 3, dans lequel le dispositif d'extraction de nutriments phosphore et azote contenus dans un effluent liquide comprend :
- un premier réacteur (10) comprenant un moyen d'extraction de CO₂, de préférence une colonne à garnissage ou un réacteur à barbotage ;
- un deuxième réacteur (20) comprenant un réacteur à lit fluidisé, de préférence surmonté d'un décanteur ;
- un troisième réacteur (30) comprenant un moyen d'extraction d'ammoniac, comprenant de préférence au moins une colonne à garnissage ou au moins un réacteur à barbotage et un laveur de gaz (306, 2306) ;
les premier, deuxième et troisième réacteurs (10, 20, 30) étant agencés en série.

5. Dispositif selon l'une quelconque des revendications précédentes, dans lequel le système de transfert de calories comprend une chaudière à tubes reliée à au moins un échangeur de chaleur.

6. Dispositif selon l'une quelconque des revendications précédentes, dans lequel le pyrolyseur (3011) est un four à soles multiples.

7. Procédé de traitement d'intrants organiques, de préférence un mélange d'une fraction organique des déchets ménagers, des boues, et éventuellement des fumiers et de graisses, comprenant les étapes :
A) introduction et digestion d'intrants dans un dispositif de méthanisation bi-étagé, de manière à obtenir un digestat D ;
B) séparation du digestat D, de manière à obtenir une fraction liquide de digestat D et une fraction solide de digestat D ;
C) introduction de la fraction liquide du digestat D dans un dispositif d'extraction et extraction de nutriments phosphore et azote contenus dans ladite fraction liquide ;
D) séchage de la fraction solide du digestat D ;
E) pyrolyse de la fraction solide du digestat D séchée obtenue à l'étape D), de manière à obtenir un syngaz et des cendres ;
F) combustion du syngaz obtenu à l'étape E).

8. Procédé selon la revendication précédente, comprenant en outre une étape G) de régulation de la température du dispositif de méthanisation bi-étagée, d'extraction et/ou de séchage par transfert des calories produites par l'étape F) de combustion.

9. Procédé selon la revendication 7 ou 8, dans lequel l'étape A) comprend les sous-étapes :
a) introduction d'intrants dans un premier réacteur (110, 1110) infiniment mélangé,
b) hydrolyse en conditions thermophiles des intrants dans le premier réacteur(110, 1110) infiniment mélangé, de manière à obtenir un digestat A ;
c) introduction dans un second réacteur (120, 1120) infiniment mélangé du digestat A obtenu à l'étape b) et du digestat C obtenu à l'étape e) ;
d) méthanogénèse en conditions mésophiles du digestat A et du digestat C introduits dans le second réacteur (120, 1120) à l'étape c), de manière à obtenir un digestat B ;
e) séparation du digestat B obtenu à l'étape d) en une première fraction (F1) et une seconde fraction (F2), ladite première fraction (F1), optionnellement épaissie, étant soumise à une détente flash de manière à obtenir un digestat C, ledit digestat C étant réintroduit dans le second réacteur à l'étape c), et un digestat D.

10. Procédé selon l'une quelconque des revendications 7 à 9, dans lequel l'étape C) comprend les sous-étapes :
a) introduction de la fraction liquide du digestat D dans un premier réacteur (10) comprenant un moyen d'extraction de CO₂, de préférence une colonne à garnissage ou un réacteur à barbotage ;
b) extraction de CO₂ de la fraction liquide du digestat D dans le premier réacteur (10), de manière à obtenir un effluent A ;
c) introduction de l'effluent A obtenu à l'étape b) dans un deuxième réacteur (20) comprenant un réacteur à lit fluidisé (201, 2201)optionnellement surmonté d'un décanteur ;
d) extraction de phosphore et d'azote de l'effluent A introduit dans le second réacteur (20) à l'étape c), de manière à obtenir un effluent B et de la struvite ;
e) introduction de l'effluent B obtenu à l'étape d) dans un troisième réacteur (30) comprenant un moyen d'extraction d'ammoniac (305, 2305), comprenant de préférence au moins une colonne à garnissage ou au moins un réacteur à barbotage et un laveur de gaz (306, 2306) ;
f) extraction de l'azote, sous forme sel d'ammonium, de l'effluent B introduit dans le troisième réacteur à l'étape e), de manière à obtenir un effluent C et d'un sel d'ammonium.

11. Procédé selon la revendication précédente, dans lequel l'étape f) comprend les sous-étapes :
i) extraction de l'azote sous forme d'ammoniac gazeux, de manière à obtenir un gaz A comprenant de l'ammoniac ;
ii) extraction de l'ammoniac du gaz A obtenu à l'étape i) avec une solution
diluée ou non diluée d'un acide fort, de manière à obtenir le sel d'ammonium.

12. Procédé selon la revendication précédente, dans lequel, l'étape i) d'extraction de l'azote sous forme d'ammoniac gazeux comprend les sous-étapes ordonnées de :
- mesure du pH de l'effluent B ;
- optionnellement, ajustement du pH de l'effluent B, lorsque sa valeur est inférieure à 10 ;
- ajustement de la température de l'effluent B à une température supérieure ou égale à 50°C, de préférence supérieure ou égale à 65°C ;
- circulation de l'effluent B, à contrecourant d'un flux d'air, successivement dans les au moins deux colonnes à garnissage agencées en série, de manière à obtenir le gaz A.

13. Procédé selon l'une quelconque des revendications 7 à 12, dans lequel l'étape B) est réalisée au moyen de d'une presse à vis (131, 1131) ou d'une centrifugeuse.

14. Procédé selon l'une quelconque des revendications 7 à 13, dans lequel l'étape D) est réalisée au moyen de d'un sécheur à bande basse température allant de 60 à 160°C, préférence à une température inférieure à 100°C.

15. Procédé selon l'une quelconque des revendications 7 à 14, dans lequel l'étape E) est réalisée au moyen d'un four à soles multiples ou d'un four discontinu à une sole.

16. Procédé selon l'une quelconque des revendications 7 à 15, comprenant en outre une étape H) d'extraction de nutriments contenus dans les cendres obtenues à l'étape F).
